(19) Europäisches Patentamt
European Patent Office
Office européen des brevets

(11) **EP 3 006 982 B1**

(12) **EUROPÄISCHE PATENTSCHRIFT**

(45) Veröffentlichungstag und Bekanntmachung des Hinweises auf die Patenterteilung:
**09.12.2020 Patentblatt 2020/50**

(51) Int Cl.:
**G02B 21/26** *(2006.01)*    **G02B 21/24** *(2006.01)*
**G02B 7/00** *(2006.01)*

(21) Anmeldenummer: **15187832.9**

(22) Anmeldetag: **01.10.2015**

(54) **DIGITALES MIKROSKOP MIT FEDERGELAGERTER SCHWENKBARER EINHEIT**

DIGITAL MICROSCOPE WITH PIVOTABLE SPRING MOUNTED UNIT

MICROSCOPE NUMÉRIQUE AVEC UNITÉ OSCILLANTE MONTÉE SUR UN RESSORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2014 DE 102014114478**

(43) Veröffentlichungstag der Anmeldung:
**13.04.2016 Patentblatt 2016/15**

(73) Patentinhaber: **Leica Microsystems (Schweiz) AG 9435 Heerbrugg (CH)**

(72) Erfinder: **MARTE, Christian 6850 Dornbirn (AT)**

(74) Vertreter: **Schaumburg und Partner Patentanwälte mbB Postfach 86 07 48 81634 München (DE)**

(56) Entgegenhaltungen:
**EP-A1- 2 803 895    EP-A2- 1 248 133
DE-A1- 4 231 516    JP-A- 2011 154 137
US-A- 5 402 582**

- **Goko Imaging Devices Co. ET AL: "USB camera for eyepieces, MVC-D USB | Eyepiece Cameras (Multi Video Camera Attachments for Viewfinders) | GOKO Imaging Devices Co., Ltd. | Imaging Products", , 1 September 2014 (2014-09-01), XP055652427, Retrieved from the Internet: URL:https://www.gokocamera.com/english/mvc /mvc-direct-usb.php [retrieved on 2019-12-12]**
- **Anonymous: "Digital Microscope Eyepiece 5.0mp - C&A Scientific", , 1 October 2014 (2014-10-01), XP055652311, Retrieved from the Internet: URL:https://www.cnascientific.com/product/ digital-microscope-eyepiece-5-0mp/ [retrieved on 2019-12-12]**
- **Microscope World: "Upgrade your Microscope to Digital", , 1 September 2014 (2014-09-01), XP055652437, Retrieved from the Internet: URL:https://www.microscopeworld.com/t-upgr ade-to-digital.aspx [retrieved on 2019-12-12]**

**Beschreibung**

Die Erfindung betrifft ein digitales Mikroskop, das einen stationären Stativgrundkörper sowie eine Schwenkeinheit umfasst, die auf einer Welle des Stativgrundkörpers um die Längsachse der Welle verschwenkbar gelagert ist. Ferner hat die Schwenkeinheit eine Bilderfassung einer zur Aufnahme von Bildern zu mikroskopierender Objekte. Darüber hinaus umfasst das Mikroskop eine Bremseinheit zum Bremsen und/oder Feststellen der Schwenkeinheit und ein Betätigungselement zum Lösen der Bremseinheit.

Hochwertige digitale Mikroskope umfassen einen stationären Stativgrundkörper, über dem das Mikroskop seine Aufstellfläche gelagert ist und eine relativ zu dem Stativgrundkörper um eine Drehachse verschwenkbare Einheit, in der insbesondere die Bilderfassungseinheit des digitalen Mikroskops und ein Objektivsystem angeordnet sind. Über dieses Verschwenken soll insbesondere erreicht werden, dass die Objekte aus verschiedenen Blickwinkeln betrachtet werden können, was insbesondere für die Beurteilung von Tiefeninformationen vorteilhaft sein kann.

Wenn die Schwenkeinheit so angeordnet ist, dass die Schwenkeinheit gerade über dem Objekttisch angeordnet ist und somit das Schwerpunktlot durch die Drehachse der Schwenkeinheit, also die Längsachse der Welle, verläuft, so wirkt auf die Schwenkeinheit kein Drehmoment und die Schwenkeinheit würde auch ohne Bremseinheit in ihrer Position bleiben. Ist die Schwenkeinheit dagegen aus dieser Position verschwenkt, so bewirkt die Gewichtskraft der Schwenkeinheit ein um die Drehachse der Schwenkeinheit gerichtetes Drehmoment, welches umso größer ist, je weiter die Schwenkeinheit aus der senkrechten Position verschwenkt ist, da der tangentiale Anteil der Schwerkraft, der das Drehmoment erzeugt, umso größer wird.

Bei bekannten digitalen Mikroskopen wird dieses Drehmoment durch die Bremseinheit aufgenommen. Dies hat den Nachteil, dass bei einem Lösen der Bremseinheit für ein Verändern der Position der Schwenkeinheit dieses Drehmoment von der Bedienperson aufgebracht werden muss. Achtet diese nicht hierauf, kann es dazu kommen, dass sich die Schwenkeinheit unkontrolliert bewegt, was zu Beschädigungen des Mikroskops oder zu Sach- oder Personenschäden führen kann. Darüber hinaus hat dies den Nachteil, dass die Bremseinheit entsprechend dimensioniert sein muss, dass sie auch bei maximaler Auslenkung der Schwenkeinheit diese zuverlässig in ihrer Position halten kann. Hierfür sind ausreichend große und somit bauraumintensiv dimensionierte Bremseinheiten notwendig

Aus der DE 42 31 516 A1 ist ein Operationsmikroskop bekannt, das um eine Achse drehbar an einem Stativ befestigt ist. Beim Verstellen des Stativs und/oder des Mikroskops und/oder beim Anbringen zusätzlicher Zubehörteile ändert sich der Schwerpunkt, so dass ein Ausgleich erfolgen muss. Hierzu ist an dem Stativende, an dem das Mikroskop befestigt ist, eine Drehfeder angeordnet, durch die das Gegenmoment aufgebracht wird. Das Einstellen der Drehfeder kann manuell oder motorisch erfolgen. In jedem Fall ist eine entsprechende Anpassung des Drehmomentes der Drehfeder für den Ausgleich erforderlich.

Aus dem Dokument EP 1 248 133 A2 ist ein Operationsmikroskopstativ bekannt, bei dem über eine Torsionsfeder eine Schwingungsdämpfung vorgenommen wird.

Das Dokument US 5 402 582 A offenbart einen Arm für Messeinrichtungen, wobei einzelne Armteile gegeneinander verdrehbar sind und ein Momentenausgleich über in Gelenken vorgesehene Drehfedern erfolgt.

Aus der nachveröffentlichten Anmeldung EP 2 803 895 A1 ist ein Schwenkarmstativ für ein Digitalmikroskop bekannt, das einen stationären Stativgrundkörper aufweist, der aus einem Stativfuß gebildet ist, auf dem ein Lagerblock montiert ist. In dem Stativgrundkörper ist eine Lagerung für einen um eine Drehachse schwenkbaren Gelenkteil mit daran fest angeordnetem Schwenkarm integriert. Die Bewegung des Schwenkarms lässt sich durch eine um die Drehachse angeordnete Magnetbremse blockieren. Diese Blockierung kann für die Dauer eines Tastendrucks eines Tasters aufgehoben werden, indem die Magnetbremse gelöst wird. Es sind Zugfedern vorgesehen, die bewirken, dass sich das vom Benutzer zur Einstellung des Schwenkwinkels des Schwenkarms aufzubringende Drehmoment im gesamten Schwenkwinkelbereich reduzieren lässt.

JP 2011 154137 A offenbart ein Mikroskop mit einem stationären Stativgrundkörper und einer an dem Stativgrundkörper gelagerten Schwenkeinheit. Das Mikroskop weist Zugfedern auf, die beim Verschwenken der Schwenkeinheit ein Rückstellelement gegen die Gewichtskraft der Schwenkeinheit ausüben.

Es ist Aufgabe der Erfindung, ein digitales Mikroskop anzugeben, dessen Schwenkeinheit bedienerfreundlich und mit minimalem Kraftaufwand bewegt werden kann.

Diese Aufgabe wird durch ein digitales Mikroskop mit den Merkmalen des Anspruchs 1 gelöst. Vorteilhafte Weiterbildungen der Erfindung sind in den abhängigen Ansprüchen angegeben.

Erfindungsgemäß umfasst das Mikroskop ein elastisches Element, das beim Verschwenken der Schwenkeinheit aus einer vorbestimmten Nullposition ein Rückstellmoment auf die Schwenkeinheit ausübt, wobei das Rückstellmoment einem durch die Gewichtskraft der Schwenkeinheit bewirkten Drehmoment, dem sogenannten Tangentialmoment, entgegen gerichtet ist.

Hierdurch wird erreicht, dass im festgestellten Zustand, also bei in der Bremsposition angeordneter Bremseinheit, nicht das gesamte Drehmoment der Schwenkeinheit durch die Bremseinheit aufgenommen werden muss, sondern zumindest ein Teil des Drehmomentes auch durch das elastische Element aufgenommen wird. Ferner muss somit eine Bedienperson, wenn das Bremssystem gelöst ist, zum Verschwenken der Schwenkeinheit eine geringere Kraft aufwenden, als wenn das elastische Element nicht vorgesehen wäre, so dass ein einfacheres Bedienen möglich ist. Insbesondere wird hierdurch vermieden, dass sich die Schwenkeinheit ungewollt unkontrolliert bewegt und es somit zu Sach- oder Personenschäden kommt. Da das Bremssystem somit eine geringere Bremskraft aufwenden muss, kann es somit kleiner dimensioniert werden, so dass ein kompakter kostengünstiger Aufbau erreicht wird.

Bei einer bevorzugten Ausführungsform entspricht zumindest in einem Teilbereich des Schwenkbereichs der Schwenkeinheit das Rückstellmoment dem 0,8-fachen bis 1,2-fachen des Tangentialmomentes.

Das elastische Element ist insbesondere derart gewählt, dass über den gesamten Schwenkbereich das Rückstellmoment dem 0,8-fachen bis 1,2-fachen des Tangentialmomentes entspricht.

Hierdurch wird erreicht, dass das resultierende Moment zumindest in einem Teilbereich maximal +/-20% des Tangentialmoments beträgt, und somit die von der Bedienperson bzw. der Bremseinheit aufzubringende Kraft gering ist und ein Wegschnellen der Schwenkeinheit beim Lösen der Bremseinheit in beiden Richtungen vermieden wird.

Die Nullposition ist insbesondere diejenige Position, bei der die optische Achse des Mikroskopes bzw. der Strahlengang des Mikroskops senkrecht zur Oberfläche des Mikroskoptischs, auf dem die zu mikroskopierende Objekte anordenbar sind, angeordnet ist. In dieser Nullposition wird auch der Zoom des Mikroskops in Bezug auf die Oberfläche des Mikroskoptischs kalibriert.

Bei einer bevorzugten Ausführungsform ist das elastische Element an dem Stativgrundkörper befestigt, so dass dieses nicht zusammen mit der Schwenkeinheit verschwenkt werden muss. Hierdurch wird ein besonders einfacher Aufbau erreicht. Bei einer alternativen Ausführungsform der Erfindung kann das elastische Element auch Teil der Schwenkeinheit sein, und somit mit dieser mitverschwenkt werden.

Bei einer besonders bevorzugten Ausführungsform ist das elastische Element in Form einer Torsionsfeder ausgebildet. Hierdurch wird ein besonders einfacher, kostengünstiger und stabiler Aufbau erreicht.

Die Torsionsfeder ist insbesondere derart angeordnet, dass die Längsachse der Torsionsfeder mit der Längsachse der Welle zusammenfällt. Unter der Längsachse der Torsionsfeder wird insbesondere die Längsachse des Zylinders verstanden, der sich durch die Wicklung der Torsionsfeder ergibt. Hierdurch wird erreicht, dass die Torsionsfeder immer um den Winkel gespannt wird, um den die Schwenkeinheit verschwenkt ist. Insbesondere wird somit erreicht, dass bei einem Verschwenken der Schwenkeinheit aus der Nullposition in beide Richtungen die Torsionsfeder jeweils entsprechend gleich gespannt ist und somit die gleiche Rückstellkraft und damit das gleiche Gegenmoment ausgeübt wird. Das Gegenmoment ist insbesondere dasjenige Moment, das durch die Rückstellkraft der Torsionsfeder um die Drehachse der Schwenkeinheit, also die Längsachse der Welle, erzeugt wird.

Unter Längsachsen wird im Rahmen dieser Anmeldung insbesondere der jeweils mathematische Begriff einer Achse, also als eine unendliche Gerade verstanden. Die Längsachse ist somit insbesondere nicht auf die Länge des Bauteils beschränkt.

Der Stativgrundkörper umfasst eine Kulisse und die Schwenkeinheit einen Stab, der fest mit der Schwenkeinheit verbunden ist und in die Kulisse hineinragt. Hierdurch wird zum einen eine Führung der Schwenkeinheit bei deren Verschwenken zum Stativgrundkörper und zum anderen eine Begrenzung der maximal möglichen Verschwenkung der Schwenkeinheit aus der Nullposition erreicht. Die Kulisse ist insbesondere derart ausgebildet, dass die Schwenkeinheit aus der Nullposition innerhalb eines symmetrischen Schwenkbereiches in zwei entgegengesetzte Richtungen verschwenkt werden kann. Insbesondere kann die Schwenkeinheit jeweils um 60° in beide Richtungen aus der Nullposition heraus verschwenkt werden, so dass sich insbesondere ein Schwenkbereich von 120° ergibt. Diese Begrenzung hat den Vorteil, dass die sich bei einer Verkippung um 60° in beide Richtungen maximal ergebende Tangentialkraft der Gewichtskraft, also diejenige Kraft, die das Drehmoment bewirkt, annähernd linear zu dem Winkel, um den die

Schwenkeinheit verschwenkt ist, ist, so dass durch eine Feder mit einer linearen Kennlinie ein annähernd gleichmäßiger Anteil als Gegenmoment aufgebracht werden kann.

Die Kulisse ist vorzugsweise kreissegmentförmig ausgebildet, wobei der Mittelpunkt des Kreises auf der Drehachse der Schwenkeinheit, also der Längsachse der Welle, liegt.

Ferner ist es vorteilhaft, wenn die Torsionsfeder drehbar auf einem Wellenstumpf oder einer Welle angeordnet ist und wenn die Enden des Drahtes der Torsionsfeder derart zur eigentlichen Wicklung der Torsionsfeder abgewinkelt sind, dass zwischen ihnen ein Zwischenraum ausgebildet ist. In diesem Zwischenraum ist zum einen der in der Kulisse geführte Stab zumindest teilweise angeordnet und zum anderen ein Vorsprung des Stativgehäuses.

Hierdurch wird erreicht, dass bei einem Verschwenken der Schwenkeinheit aus der Nullposition in eine erste Richtung sich das erste Ende des Drahtes der Torsionsfeder an dem Vorsprung abstützt und das zweite Ende des Drahtes der Torsionsfeder von dem Stab mitgenommen wird, so dass die Torsionsfeder entsprechend mit zunehmenden Schwenken der Schwenkeinheit aus der Nullposition weiter gespannt wird und eine größere Rückstellkraft aufgebracht wird. Umgekehrt wird bei einem Verschwenken der Schwenkeinheit aus der Nullposition in eine der ersten Richtung entgegengesetzte zweite Richtung das erste Ende des Drahtes der Torsionsfeder von dem Stab mitgenommen, wohingegen sich das zweite Ende des Drahtes der Torsionsfeder an dem Vorsprung abstützt. Entsprechend wird auch hierbei die Feder wieder zunehmend gespannt, so dass sich eine zunehmende Rückstellkraft in Abhängigkeit des Auslenkungswinkels der Schwenkeinheit ergibt. Insbesondere wird über diesen Aufbau auch erreicht, dass bei einer gleichen Auslenkung in die erste und die zweite Richtung jeweils die gleiche Rückstellkraft wirkt. Ferner ermöglicht der zuvor beschriebene Aufbau eine einfache Montage, da die Feder einfach aufgesteckt werden muss und nicht aufwendig befestigt werden muss.

Ferner ist es vorteilhaft, wenn die Längsachse des Wellenstumpfes mit der Längsachse der Welle, auf der die Schwenkeinheit gelagert ist, zusammenfällt, so dass ein besonders einfacher Aufbau gegeben ist und die zuvor beschriebenen Kraftzusammenhänge sichergestellt sind.

In der Nullposition kontaktiert der Stab insbesondere keines der beiden Enden der Torsionsfeder, so dass diese in dem Nullzustand nicht gespannt ist und somit keine Rückstellkraft ausübt. In der Nullposition ist dies auch nicht notwendig, da ohnehin kein Drehmoment von der Schwenkeinheit ausgeht.

Es ist besonders vorteilhaft, wenn generell das elastische Element ungespannt ist, wenn die Schwenkeinheit in der Nullposition angeordnet ist. Hierdurch wird insbesondere Ermüdungen des elastischen Elementes vorgebeugt.

Es ist besonders vorteilhaft, wenn das elastische Element derart ausgebildet oder angeordnet ist, dass dessen Rückstellmoment, das durch die Rückstellkraft bewirkt wird, dem Tangentialmoment entgegenwirkt, das durch die Tangentialkraft bewirkt wird, die sich beim Aufteilen der im Schwerpunkt der Schwenkeinheit angreifenden Gewichtskraft der Schwenkeinheit in eine in Richtung der Längsachse der Welle gerichtete Radialkraft und eben jene Tangentialkraft ergibt. Das Tangentialmoment ergibt sich insbesondere durch Multiplikation des Tangentialkraft mit dem Normalabstand der Tangentialkraft zur Drehachse. Das Rückstellmoment ist für jede Ausrichtung der Schwenkeinheit vorzugsweise in etwa gleich groß oder größer als das Tangentialmoment.

Gemäß einem vereinfachten Modell kann man sich die Schwerkraft der Schwenkeinheit als eine im Schwerpunkt der Schwenkeinheit angreifende Kraft vorstellen. Diese Gewichtskraft lässt sich bei jeder Stellung der Schwenkeinheit in eine Tangentialkraft und eine radiale Kraft aufteilen, die von dem Schwerpunkt zur Drehachse der Schwenkeinheit gerichtet ist und die somit kein Drehmoment um die Drehachse der Schwenkachse erzeugt. Bei dieser Aufteilung ergibt sich eine weitere Kraft, die Tangentialkraft, die entsprechend orthogonal zu der zur Drehachse gerichteten Radialkraft ist und die somit auch orthogonal zu einer Verbindungslinie zwischen dem Schwerpunkt und der Drehachse der Schwenkeinheit ist. Diese Tangentialkraft ist für die Erzeugung des Tangentialmoments verantwortlich. Die Rückstellkraft bewirkt das Rückstellmoment, welches entgegen dem Tangentialmoment gerichtet ist, also einen umgekehrten Drehsinn hat.

Das Rückstellmoment ist zumindest in einem Teilbereich des Schwenkbereiches, vorzugsweise über den gesamten Schwenkbereich größer oder gleich dem Tangentialmoment. Somit ist eine besonders einfache Schwenkbewegung der Schwenkeinheit möglich, bei welcher der Nutzer ohne großen Kraftaufwand die Schwenkeinheit stets sicher und genau kontrollieren kann.

Das Rückstellmoment ergibt sich insbesondere als Produkt der Rückstellkraft des elastischen Elements und des Abstandes der Rückstellkraft zur Drehachse. Entsprechend ergibt sich das Tangentialmoment insbesondere als Produkt der Tangentialkraft und des Abstandes der Tangentialkraft zur Drehachse.

Das Rückstellmoment ($M_R$) und das Tangentialmoment ($M_T$) erfüllen insbesondere in zumindest einem Teilbereich des Schwenkbereichs die Gleichung:

$$M_R >= M_T$$

Es ist besonders vorteilhaft, wenn diese Gleichung für jedes Verschwenken der Schwenkeinheit aus dem Nullposition um mindestens 83%, vorzugsweise mindestens 67%, insbesondere mindestens 50%, des maximalen Schwenkwinkels erfüllt ist. Somit ist die Gleichung insbesondere jeweils an den Enden des Schwenkbereiches, also bei einem Verschwenken zwischen 83% und 100% bzw. zwischen 67% und 100% bzw. zwischen 50% und 100% des maximalen Schwenkwinkels, erfüllt. Hierdurch wird ein starkes Anschlagen an die Anschläge zur Begrenzung des Schwenkbereichs vermieden.

Bei einer besonders bevorzugten Ausführungsform ist diese Gleichung für den gesamten Schwenkbereich erfüllt.

Es ist besonders vorteilhaft, wenn diese Gleichung für jedes Verschwenken der Schwenkeinheit aus dem Nullposition um mindestens 50°, vorzugsweise mindestens 40°, insbesondere mindestens 30°, erfüllt ist. Bei einer besonders bevorzugten Ausführungsform ist diese Gleichung für den gesamten Schwenkbereich erfüllt.

Bei einem maximalen Schwenkwinkel von 60 ° ist die oben genannte Gleichung somit insbesondere bei einem Verschwenken zwischen 50° und 60° oder zwischen 40° und 60° oder zwischen 30° und 60° aus der Nullposition heraus erfüllt.

Dies kann bei einer Auslenkung von maximal 60° in jede Richtung von der Nullposition aus gesehen, insbesondere durch ein elastisches Element mit einer linearen Kennlinie erreicht werden, da das Tangentialmoment zwar proportional zum Sinus des Schwenkwinkels ist, dieser aber in einem Bereich von 60° um den Nullpunkt in etwa linear verläuft.

Ferner ist es vorteilhaft, wenn die Schwenkeinheit ein erstes Rastelement umfasst und wenn der Stativgrundkörper ein, insbesondere komplementär zum ersten Rastelement ausgebildetes, zweites Rastelement umfasst. Das erste Rastelement und das zweite Rastelement sind miteinander gekoppelt, wenn die Schwenkeinheit in einer vorbestimmten Nullposition angeordnet ist und wenn das Betätigungselement in einer unbetätigten Grundposition angeordnet ist. Ferner sind das erste Rastelement und das zweite Rastelement miteinander gekoppelt, wenn die Schwenkeinheit in der Nullposition angeordnet ist und wenn das Betätigungselement innerhalb eines vorbestimmten ersten Betätigungsbereiches betätigt ist. Insbesondere rastet das erste Rastelement in das zweite Rastelement ein.

Durch das Koppeln des ersten und des zweiten Rastelement wird erreicht, dass eine Bedienperson des Mikroskopes die Nullposition jederzeit wieder leicht auffinden kann. Insbesondere kann die Bedienperson, wenn die Schwenkeinheit zuvor aus der Nullposition heraus bewegt worden war, diese bei innerhalb des ersten Betätigungsbereichs betätigten Betätigungselement so lange bewegen, bis ein Einrasten des ersten Rastelementes in das zweite Rastelement erfolgt. Durch das Einrasten wird der Bedienperson unmittelbar und intuitiv signalisiert, dass die Schwenkeinheit in der Nullposition angeordnet ist.

Die Nullposition ist insbesondere derart gewählt, dass die Schwenkeinheit ausgehend von der Nullposition in beide Richtungen um den gleichen Winkel geschwenkt werden kann, so dass die Nullposition die mittige Position darstellt.

Die Bremseinheit ist insbesondere innerhalb der Schwenkeinheit angeordnet, so dass die Bremseinheit mit verschwenkt wird.

Es ist besonders vorteilhaft, dass, wenn die Schwenkeinheit in der Nullposition angeordnet ist und wenn das Betätigungselement innerhalb eines vorbestimmten zweiten Betätigungsbereiches, der vom ersten Betätigungsbereich verschieden ist und sich mit diesem auch nicht überschneidet, betätigt ist, dass erste Rastelement dennoch nicht mit dem zweiten Rastelement gekoppelt ist, insbesondere nicht in dieses einrastet. Hierdurch wird erreicht, dass die Bedienperson in Abhängigkeit davon, wie weit sie das Betätigungselement betätigt, wählen kann, ob beim Bewegen in die Nullposition ein Koppeln der Rastelemente erfolgen soll oder nicht. Durch diesen zweiten Betätigungsbereich wird insbesondere sichergestellt, dass die Schwenkeinheit von der einen Seite über die Nullposition hinaus zur anderen Seite bewegt werden kann, ohne dass ein Koppeln erfolgt. Dies ist insbesondere bei Videoaufnahmen über die Bilderfassungseinheit sehr sinnvoll, da ansonsten über das Einrasten Vibrationen und Erschütterungen entstehen könnten. Darüber hinaus führt das Koppeln bei Bedienpersonen in der Regel intuitiv dazu, dass sie in diesem Bereich die ausgeübte Kraft und somit die Geschwindigkeit, mit der die Schwenkeinheit von ihnen bewegt wird, verändern, was ebenfalls Unregelmäßigkeiten bei Videoaufnahmen erzeugen würde.

Der erste Betätigungsbereich ist insbesondere zwischen der Grundposition und dem zweiten Betätigungsbereich angeordnet. Ferner ist es vorteilhaft, wenn der erste Betätigungsbereich sich unmittelbar an die Grundposition und der zweite Betätigungsbereich unmittelbar an den ersten Betätigungsbereich anschließt.

In Abhängigkeit der Betätigung des Betätigungselementes wird insbesondere auch die Bremseinheit unterschiedlich weit gelöst, d.h., dass in Abhängigkeit davon, wie weit das Betätigungselement betätigt wird, die erzeugte Bremskraft stufenlos verstellt werden kann. Somit kann durch die Vorgabe von zwei Betätigungsbereichen und nicht nur einzelner Betätigungspunkte, innerhalb der Betätigungsbereiche jeweils die Bremskraft geregelt werden.

Innerhalb des ersten Betätigungsbereiches übt die Bremseinheit insbesondere zwar eine Bremskraft aus, diese ist aber nur so groß, dass dennoch ein Verstellen der Schwenkeinheit möglich ist. Ist dagegen das Betätigungselement in seiner Grundposition, also unbetätigt, so ist die Bremskraft so stark, dass ein Verschwenken der Schwenkeinheit nicht möglich ist.

Das Betätigungselement kann insbesondere um einen vorbestimmten maximalen Betätigungsweg betätigt werden. Die beiden Betätigungsbereiche sind insbesondere derart gewählt, dass der erste Betätigungsbereich in etwa die sich an die Grundposition anschließende erste Hälfte des maximalen Betätigungsweges und der zweite Betätigungsbereich die sich an die erste Hälfte anschließende zweite Hälfte des maximalen Betätigungsweges abdeckt.

Hierdurch wird erreicht, dass sowohl für den ersten als auch für den zweiten Betätigungsbereich ein ausreichender Spielraum für Verfügung steht und ein einfaches intuitives Bedienen durch die Bedienperson erzielt wird.

Der Übergang zwischen den beiden Betätigungsbereichen kann insbesondere fließend sein.

Ferner ist es vorteilhaft, wenn bei einer Betätigung des Betätigungselementes sowohl innerhalb des ersten als auch innerhalb des zweiten Betätigungsbereichs die Bremseinheit zumindest so weit gelöst ist, dass ein Verschwenken der Schwenkeinheit möglich ist.

Die Rastverbindung zwischen dem ersten und dem zweiten Rastelement ist insbesondere derart ausgebildet, dass sich die Rastverbindung beim Verschwenken der Schwenkeinheit aus der Nullposition automatisch löst und/oder umgekehrt beim Schwenken der Schwenkeinheit von einer Position außerhalb der Nullposition in die Nullposition hinein automatisch hergestellt wird, sofern das Betätigungselement jeweils innerhalb des ersten Betätigungsbereiches betätigt ist. Mit diesem automatischen Lösen und Herstellen der Rastverbindung wird erreicht, dass hierfür keine Bedienung notwendig ist, sondern dies beim Verschwenken der Schwenkeinheit automatisch jeweils beim Hineinbewegen in die bzw. Hinausbewegen aus der Nullposition erfolgt. Somit soll über die Rastverbindung keine Feststellwirkung erzeugt werden, sondern lediglich eine Positionsanzeige erreicht werden.

Insbesondere ist die Rastverbindung derart ausgebildet, dass beim Lösen und Wiederherstellen der Rastverbindung durch Schwenken der Schwenkeinheit ein akustisches, haptisches und/oder optisches Signal, insbesondere ein "Klicken", ausgegeben wird. Hierüber kann die Bedienperson sehr einfach und intuitiv die Nullposition wahrnehmen. Insbesondere ist dieses Signal derart ausgebildet, dass dafür keine elektrischen Bauteile notwendig sind, sondern es rein durch die mechanische Herstellung der Rastverbindung ausgegeben wird.

Die Rastverbindung ist insbesondere in Form eines sogenannten Klickstopps ausgebildet, der durch ein entsprechendes "Klicken" die Nullposition anzeigt.

Bei einer besonders bevorzugten Ausführungsform ist das erste Rastelement entlang eines vorbestimmten Weges bewegbar, insbesondere linear verschiebbar, angeordnet. Wenn das Betätigungselement in seiner Grundposition angeordnet ist, also wenn das Betätigungselement nicht betätigt ist, ist das erste Rastelement in einer Ausgangsposition angeordnet, in der es in das zweite Rastelement eingreift, sofern die Schwenkeinheit in der Nullposition angeordnet ist. Ferner ist das Rastelement derart ausgebildet und/oder derart mit dem Betätigungselement gekoppelt, dass bei einer Betätigung des Betätigungselementes innerhalb des ersten Betätigungsbereiches das erste Rastelement höchstens so weit aus seiner Ausgangsposition hinaus bewegt wird, dass es zumindest teilweise in das zweite Rastelement einrastet, immer vorausgesetzt, dass die Schwenkeinheit in der Nullposition angeordnet ist. Es ist besonders vorteilhaft, wenn die Kopplung rein mechanisch erfolgt, so dass das Verstellen auch ohne elektrischen Strom möglich ist. Darüber hinaus ist es besonders vorteilhaft, wenn das erste Rastelement bei einer Betätigung des Betätigungselementes innerhalb des ersten Betätigungsbereiches vollständig in seiner Ausgangsposition verbleibt, so dass immer die Rastverbindung hergestellt wird.

Bei einer Betätigung des Betätigungsbereiches innerhalb des zweiten Betätigungsbereiches dagegen ist das erste Rastelement so weit aus seiner Ausgangsposition hinausbewegt, dass es nicht mehr in das zweite Rastelement einrastet, selbst wenn die Schwenkeinheit in der Nullposition angeordnet ist.

Auf diese Art kann auf einfache Weise erreicht werden, dass ein Einrasten nur bei einer Betätigung innerhalb des ersten Betätigungsbereiches erfolgt und somit je nach Betätigung gewählt werden kann, ob die Nullposition "überfahren" werden soll oder ob ein Signal ausgegeben werden soll.

Es ist besonders vorteilhaft, wenn das erste Rastelement über ein elastisches Element in der Ausgangsposition vorgespannt ist. Hierdurch wird erreicht, dass es sich automatisch immer wieder in die Ausgangsposition zurück bewegt. Darüber hinaus wird hierdurch erreicht, dass das Rastelement, wenn es zuvor nicht in der Ausgangsposition angeordnet war, beispielsweise weil die Schwenkeinheit nicht in der Nullposition angeordnet ist, automatisch in diese Ausgangsposition bewegt wird. Ist die Schwenkeinheit außerhalb der Nullposition angeordnet, so ist das erste Rastelement insbesondere entgegen der Rückstellkraft des elastischen Elements durch den Kontakt zu einer Anlagefläche aus der Ausgangsposition hinaus bewegt. Wird die Schwenkeinheit in der Nullposition bewegt, so dass das erste Rastelement in den Bereich des zweiten Rastelementes gelangt, so wird es über die Rückstellkraft des elastischen Elementes in dieses zweite Rastelement hinein und somit in die Ausgangsposition bewegt. Entsprechend wird umgekehrt bei Bewegen der Schwenkeinheit aus der Nullposition heraus bei innerhalb des ersten Betätigungselementbereiches betätigten Betätigungselement das erste Rastelement über den Kontakt zum zweiten Rastelement und/oder der Anlagefläche entgegen der Rückstellkraft der Feder wieder aus der Ausgangsposition bewegt.

Bei dem elastischen Element handelt es sich insbesondere um eine Feder, beispielsweise eine Druckfeder. Hierdurch wird ein besonders einfacher Aufbau erreicht.

Das erste Rastelement ist insbesondere als ein Stift ausgebildet. Das zweite Rastelement ist entsprechend komplementär als eine Aussparung, insbesondere als eine Aussparung innerhalb einer koaxial zur Welle angeordneten Scheibe, ausgebildet. Ist das Betätigungselement nicht oder nur innerhalb des ersten Betätigungsbereiches betätigt, so rastet der Stift in die Aussparung ein, sofern die Schwenkeinheit in der Nullposition angeordnet ist. Der Stift hat insbesondere ein abgerundetes, insbesondere ein halbkugelförmiges, Ende, mit dem es in die Aussparung eingreift. Entsprechend hat auch die Aussparung insbesondere eine abgeschrägte, abgerundete oder halbkugelförmige Form. Hierdurch wird erreicht, dass beim Bewegen der Schwenkeinheit aus der Nullposition hinaus das erste Rastelement durch diese Abschrägung aus seiner Ausgangsposition hinaus bewegt wird. Insbesondere wird somit ein Verkanten und eine Sperrwirkung der Rastverbindung vermieden. Vorzugsweise wird durch diese Abschrägung oder Abrundung sichergestellt, dass durch die Rastverbindung keine Feststellung erfolgt, sondern nur eine Signalisierung der Nullposition.

Es ist besonders vorteilhaft, wenn der Stift ein Langloch aufweist, in das ein mit dem Betätigungselement fest verbundener weiterer Stift eingreift, wobei das Langloch derart ausgebildet ist, dass der weitere Stift bei einer Betätigung des Betätigungselementes innerhalb des ersten Betätigungsbereiches innerhalb des Langloches bewegt wird, ohne dass der eine Stift, also das erste Rastelement, hierdurch bewegt wird. Hierdurch wird erreicht, dass bei einer Betätigung des Betätigungselementes innerhalb des ersten Betätigungsbereiches das erste Rastelement in seine Ausgangsposition belassen wird oder somit die Rastverbindung zum zweiten Rastelement hergestellt wird.

Bei einer besonders bevorzugten Ausführungsform umfasst die Bremseinheit mindestens ein mit Hilfe eines weiteren elastischen Elements in einer Bremsposition vorgespanntes Bremselement, das in der Bremsposition die Welle kontaktiert und über diesen Kontakt die Bremskraft erzeugt. Das Bremselement ist durch manuelle Betätigung des Betätigungselementes entgegen der Rückstellkraft des weiteren elastischen Elementes von der Bremsposition in eine gelöste Position bewegbar. Die Kopplung zwischen dem Betätigungselement und dem Bremselement erfolgt über eine Kopplungseinheit. Bei dieser gelösten Position ist insbesondere ein Verschwenken der Schwenkeinheit um die Längsachse der Welle möglich.

Bei einer bevorzugten Ausführungsform ist das Betätigungselement ist mit Hilfe einer Kopplungseinheit rein mechanisch mit dem Bremselement gekoppelt. Alternativ oder zusätzlich ist auch eine magnetische und/oder elektrische Kopplung möglich.

Durch die vorzugsweise rein mechanische Kopplung wird der Vorteil erreicht, dass ein Verschwenken der Schwenkeinheit auch ohne Zuführung von elektrischem Strom möglich ist. Durch das elastische Element wird ferner sichergestellt, dass die Bremseinheit automatisch die Schwenkeinheit immer feststellt, indem, ohne Betätigung des Betätigungselementes, das Bremselement immer in der Bremsposition angeordnet ist und somit die notwendige Bremskraft ausübt. Somit kann ein unbeabsichtigtes Verschwenken der Schwenkeinheit nicht passieren, so dass Sach- und Personenschäden vorgebeugt wird. Darüber hinaus ermöglicht ein solches rein mechanisch gekoppeltes Bremselement, das über den Kontakt mit der Welle und somit die hierdurch entstehende Reibkraft seine bremsende Wirkung erzeugt, dass die Bremskraft vom Bediener stufenlos reguliert werden kann, je nachdem wie weit er das Betätigungselement tatsächlich betätigt. Hierüber ist insbesondere eine Feineinstellung der Position der Schwenkeinheit möglich. Hierzu wird das Betätigungselement nur minimal betätigt, so dass immer noch eine Bremskraft ausgeübt wird, diese jedoch nur so groß ist, dass nichts destotrotz ein Verstellen der Schwenkeinheit möglich ist, wobei hierbei durch die Bedienperson nicht die gesamte Gewichtskraft der Schwenkeinheit gehalten werden muss, sondern diese zum großen Teil durch die Bremskraft aufgebracht wird. Somit kann sich die Bedienperson auf die konkrete Feinpositionierung konzentrieren und diese wesentlich genauer vornehmen, als wenn sie die gesamte Schwenkeinheit halten müsste.

Die Bremskraft wird insbesondere durch die Reibverbindung zwischen dem Bremselement und der Welle erzeugt. Hierbei hängt die Bremskraft insbesondere davon ab, mit welcher Kraft das Bremselement gegen die Welle gedrückt wird. Diese Kraft wiederum wird durch das elastische Element aufgebracht, wobei bei einer Betätigung des Betätigungselementes eine entgegen der Rückstellkraft des elastischen Elementes gerichtete Kraft aufgebracht wird, wodurch die resultierende, von dem Bremselement auf die Welle wirkende Kraft verringert wird, so dass auch eine geringere Bremskraft erzeugt wird. Dies ermöglicht das zuvor beschriebene stufenlose Regulieren der Bremskraft.

Bei einer besonders bevorzugten Ausführungsform der Erfindung umfasst die Bremseinheit mehrere über jeweils ein elastisches Element in der Bremsposition vorgespannte Bremselemente. Hierbei sind alle Bremselemente derart mit dem Betätigungselement gekoppelt, dass diese mit Hilfe des Betätigungselementes von der Bremsposition in die gelöste Position bewegbar sind. Durch das Vorsehen mehrerer Bremselemente, die insbesondere an verschiedenen Stellen der Welle angeordnet sind, wird erreicht, dass eine größere, und insbesondere gleichmäßig verteilte, Bremskraft erreicht wird, so dass das Bremsen und die Feststellung der Schwenkeinheit zuverlässig und sicher erfolgen kann.

Die Bremselemente sind insbesondere gleich ausgebildet. Auch die elastischen Elemente sind vorzugsweise gleich ausgebildet. Alternativ können auch bei einer Ausführungsform unterschiedliche Bremselement und/oder unterschiedliche elastische Elemente verwendet werden. Die im folgenden beschriebenen Merkmale, mit denen die Bremselemente und die elastischen Elemente weitergebildet werden können, können bei Ausführungsformen mit mehreren Bremselementen sowohl für alle Bremselemente als auch jeweils nur für einen Teil der Bremselemente verwendet werden. Insbesondere können verschiedene Bremselemente mit einem Teil der nachfolgend beschriebenen Merkmale miteinander kombiniert werden.

Durch die Kopplung aller Bremselemente mit einem einzigen Betätigungselement wird erreicht, dass die Bedienperson entsprechend auch nur ein Betätigungselement betätigen muss und somit eine besonders einfache Bedienung gewährleistet ist. Das Bremselement bzw. die Bremselemente sind insbesondere als Radialkolben ausgebildet, d.h. Kolben, die radial gerichtete Kräfte auf die Welle ausüben, sofern sie gegen diese gedrückt werden. Durch solche Radialkolben wird zum einen ein besonders einfacher Aufbau erreicht und zum anderen eine sehr gute Kraftübertragung auf die Welle gewährleistet.

Der Radialkolben bzw. die Radialkolben haben vorzugsweise jeweils eine um einen vorbestimmten Winkel abgeschrägten Kontaktbereich zum Kontaktieren der Welle, wobei die Kraft von dem Radialkolben insbesondere über diesen Kontaktbereich aufgebracht wird. Bei einem abgeschrägten Bereich erfolgt die Kraftübertragung insbesondere entlang einer Linie. Der Kontaktbereich ist vorzugsweise um einen Winkel zwischen 20° und 45°, insbesondere um etwa 30°, relativ zur Mantelfläche des Radialkolbens abgeschrägt. Entsprechend hat er zur Stirnfläche insbesondere einen Winkel zwischen 45° und 70°, vorzugsweise von 60°.

Bei einer alternativen Ausführungsform der Erfindung kann der Kontaktbereich auch eine andere Form aufweisen. Insbesondere kann der Kontaktbereich auch zylindersegmentförmig ausgebildet sein und insbesondere genau auf den Durchmesser der Welle abgestimmt werden, so dass ein sehr großer Kontaktbereich erzielt wird und die Kraft somit nicht nur entlang einer Linie sondern auf eine großen Fläche übertragen werden kann. Hierdurch wird ein noch sicherer und gleichmäßigerer Kraftübertrag und eine bessere Brems- und Feststellwirkung erzielt.

Das elastische Element bzw. die elastischen Elemente, über das bzw. die die Bremselemente in der Bremsposition vorgespannt ist bzw. sind, sind insbesondere als Federn, vorzugsweise als Druckfedern, ausgebildet. Hierdurch wird ein besonders einfacher und sicherer Aufbau erreicht. Alternativ können beispielsweise auch Gummiblöcke verwendet werden.

Bei einer besonders bevorzugten Ausführungsform ist das Bremselement stufenlos von der Bremsposition in die gelöste Position bewegbar, so dass in Abhängigkeit der Position des Bremselementes jeweils eine unterschiedliche Bremskraft aufgebracht wird. Hierdurch wird erreicht, dass die Bremskraft stufenlos, insbesondere kontinuierlich, geregelt werden kann. Hierdurch wird der Bedienkomfort erhöht und ein intuitives Bedienen ermöglicht.

Das Betätigungselement umfasst insbesondere einen um eine Schwenkachse relativ zu einem Gehäuse der Schwenkeinheit verschwenkbaren Hebel. Dieser ist insbesondere durch das elastische Element der Bremseinheit und/oder weitere elastische Elemente in einer Grundposition vorgespannt, wobei diese Grundposition diejenige Position ist, in der das Betätigungselement nicht betätigt ist und die das Betätigungselement somit einnimmt, wenn das Bremselement bzw. die Bremselemente in der Bremsposition angeordnet ist bzw. sind.

Es ist besonders vorteilhaft, wenn der Hebel zum Lösen aus dieser Grundposition in Richtung der Bedienperson hingezogen wird, so dass ein besonders einfaches und komfortables Bedienen ermöglicht wird.

Bei einer besonders bevorzugten Ausführungsform umfasst die Bremseinheit mindestens 2, vorzugsweise vier, als Radialkolben ausgebildete Bremselemente, wobei jeweils zwei dieser Radialkolben bezogen auf eine Mittelebene der Welle gegenüberliegend angeordnet sind, wobei diese gegenüberliegend angeordneten Radialkolben über jeweils ein elastisches Element in entgegengesetzte Richtungen, also aufeinander zu, vorgespannt sind. Demnach ist eine gerade Anzahl an Radialkolben, wie beispielsweise zwei, vier, sechs oder acht Radialkolben, bevorzugt, wobei zwei entsprechend der zuvor beschriebenen Radialkolben jeweils gegenüberliegend angeordnet sind.

Hierdurch wird ein besonders einfacher und kompakter Aufbau erreicht. Darüber hinaus wird ein gleichmäßiger Krafteintrag erzeugt. Insbesondere sind die Radialkolben derart angeordnet und/oder ausgebildet, dass ihre Krafteinleitstellen symmetrisch über den Umfang der Welle verteilt sind.

Ferner ist es vorteilhaft, wenn zwischen den beiden aufeinander zu vorgespannten Radialkolben jeweils ein fest mit dem Betätigungselement verbundenes Zwischenelement angeordnet ist und wenn die beiden Radialkolben aufgrund ihrer Vorspannung über ein jeweiliges elastisches Element gegen gegenüberliegende Seiten dieses Zwischenelementes drücken. Bei einer Betätigung des Betätigungselementes wird das Zwischenelement derart gekippt, dass der Abstand zwischen den Radialkolben in Abhängigkeit des Betätigungsweges des Betätigungselementes, also in Abhängigkeit davon, wie weit das Betätigungselement aus seiner Grundposition herausbewegt ist, vergrößert wird, so dass die Radialkolben von der Bremsposition in Richtung der gelösten Position bewegt werden. Insbesondere wird durch das Verkippen des Zwischenelementes dieses schräg gestellt, so dass es die Radialkolben mit seinen Kanten kontaktiert und auseinander drückt. Somit wird ein sehr sicherer, einfach ausgebildeter, kompakter Aufbau erreicht. Darüber hinaus ermöglicht dieser Aufbau, dass das Betätigungselement durch dieses Einklemmen des fest mit dem Betätigungselement verbundenen Zwischenelementes zwischen den beiden vorgespannten Radialkolben automatisch über die Radialkolben in seiner Grundposition vorgespannt ist und hierfür keine separaten elastischen Elemente vorgesehen sein müssen.

Das Kippen des Zwischenelementes erfolgt insbesondere um die gleiche Schwenkachse wie das Verschwenken des Hebels bei dessen Betätigung. Insbesondere sind die Zwischenelemente und die Lager, über die der Hebel drehbar zum Gehäuse an diesem gelagert ist, einstückig ausgebildet, so dass ein besonders einfacher Aufbau und eine sichere Betätigung erreicht werden.

Wenn die Radialkolben in der Bremsposition angeordnet sind, so kontaktieren ihre Stirnflächen das Zwischenelement, welches in einem vorbestimmten Winkel relativ zur Horizontalen angeordnet ist. Beim Verkippen des Zwischenelementes werden dessen Oberflächen entsprechend ebenfalls verkippt, so dass der Winkel zur Horizontalen vergrößert wird und hierüber der Abstand zwischen den aufeinander zugespannten Radialkolben vergrößert wird. Durch die Vergrößerung des Abstandes wiederum wird die Kraft, über die die Radialkolben an die Welle angedrückt werden, verringert, so dass die Bremskraft entsprechend reduziert wird.

Bei einer besonders bevorzugten Ausführungsform ist das Betätigungselement über das elastische Element, über das das Bremselement der Bremsposition vorgespannt ist, in einer Grundposition vorgespannt, in der das Betätigungselement angeordnet ist, wenn das Bremselement in der Bremsposition angeordnet ist. Alternativ oder zusätzlich kann das Betätigungselement auch über weitere, separate, elastische Elemente, beispielsweise Federn, in der Grundposition vorgespannt sein.

Bei einer besonders bevorzugten Ausführungsform ist die Welle hohl ausgebildet. Dies hat den Vorteil, dass diese als Kabelkanal dienen kann, durch den die Verkabelung zwischen dem Stativgrundkörper und den in der Schwenkeinheit angeordneten Baueinheiten erfolgen kann. Dies hat den Vorteil, dass auch bei einem Verschwenken der Schwenkeinheit die Verkabelung nicht gelöst werden kann und nicht im Weg ist.

Ferner ist es vorteilhaft, wenn die Schwenkeinheit ein Zoomsystem und/oder ein Objektivsystem mit mehreren wahlweise in den Strahlengang verbringbaren Objektiven umfasst. Je nach Objektiv kann eine unterschiedliche Vergrößerung des Objektes erzielt werden.

Die Objektive sind insbesondere als parfokale Objektive ausgebildet, was den Vorteil hat, dass ein Austausch verschiedener Objektive möglich ist, ohne dass eine Fokusverschiebung erfolgt, so dass kein Nachjustieren durch die Bedienperson notwendig ist.

Darüber hinaus ist es besonders vorteilhaft, wenn die Objektive werksseitig auf den vorbestimmten Abstand zwischen der Längsachse der Welle, also der Drehachse der Schwenkeinheit, und der Position, in der das jeweils gewählte Objektiv bei seiner Benutzung angeordnet ist, also der Betriebsposition, abgestimmt ist. Durch dieses Abstimmen der Objektive auf die Drehachse des Schwenksystems wird ein euzentrisches Verschwenken der Schwenkeinheit realisiert, so dass die Bedienperson beim Verschwenken der Schwenkeinheit keine neuen Justiervorgänge durchführen muss.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:

Fig. 1 eine schematische, perspektivische Darstellung eines Mikroskops;

Fig. 2 eine schematische, perspektivische Darstellung eines Ausschnitts des Mikroskops mit Blick auf eine Bremseinheit;

Fig. 3 eine Schnittdarstellung eines Ausschnitts des Mikroskops nach den Figuren 1 und 2 mit Blick auf die in einer Bremsposition angeordnete Bremseinheit;

Fig. 4 eine weitere Schnittdarstellung eines Ausschnitts des Mikroskops nach den Figuren 1 und 2 mit seitlichem Blick auf die in der Bremsposition angeordnete Bremseinheit;

Fig. 5 eine Schnittdarstellung eines Ausschnitts des Mikroskops nach den Figuren 1 und 2 mit in einer gelösten Position angeordneter Bremseinheit;

Fig. 6 eine Schnittdarstellung eines Ausschnitts des Mikroskops nach den Figuren 1 und 2 mit seitlichem Blick auf die in der gelösten Position angeordnete Bremseinheit;

Fig. 7 eine weitere schematische, perspektivische Darstellung eines Ausschnitts des Mikroskops nach den Figuren 1 und 2 mit Blick auf einen Klickstoppmechanismus;

Fig. 8 eine Schnittdarstellung eines Ausschnitts des Mikroskops nach den Figuren 1 und 2 mit einem in einer Ausgangsposition angeordnetem Rastelement des Klickstoppmechanismus;

Fig. 9 eine Schnittdarstellung eines Ausschnitts des Mikroskops nach den Figuren 1 und 2 bei in einem ersten Betätigungsbereich betätigten Betätigungselement;

Fig. 10 eine Schnittdarstellung eines Ausschnitts des Mikroskops nach den Figuren 1 und 2 mit innerhalb eines zweiten Betätigungsbereiches betätigten Betätigungselement;

Fig. 11 eine schematische, perspektivische Darstellung des Mikroskops nach den Figuren 1 und 2 mit Blick auf eine Hinterseite des Mikroskops bei ausgeblendeten Gehäuseteilen;

Fig. 12 eine Schnittdarstellung des Mikroskops nach den Figuren 1 und 2 bei in einer Nullposition angeordneter Schwenkeinheit;

Fig. 13 eine weitere Schnittdarstellung des Mikroskops nach den Figuren 1 und 2 bei aus der Nullposition in eine erste Position bewegter Schwenkeinheit;

Fig. 14 eine weitere Schnittdarstellung des Mikroskops nach den Figuren 1 und 2 mit aus der Nullposition in eine zweite Position verschwenkter Schwenkeinheit;

Fig. 15 ein Diagramm der wirkenden Kräfte in Abhängigkeit des Schwenkwinkels der Schwenkeinheit gemäß einer ersten Ausführungsform;

Fig. 16 ein Diagramm der wirkenden Kräfte in Abhängigkeit des Schwenkwinkels der Schwenkeinheit gemäß einer zweiten Ausführungsform;

Fig. 17 ein Diagramm der wirkenden Kräfte in Abhängigkeit des Schwenkwinkels der Schwenkeinheit gemäß einer dritten Ausführungsform; und

Fig. 18 ein Diagramm der wirkenden Kräfte in Abhängigkeit des Schwenkwinkels der Schwenkeinheit gemäß einer vierten Ausführungsform.

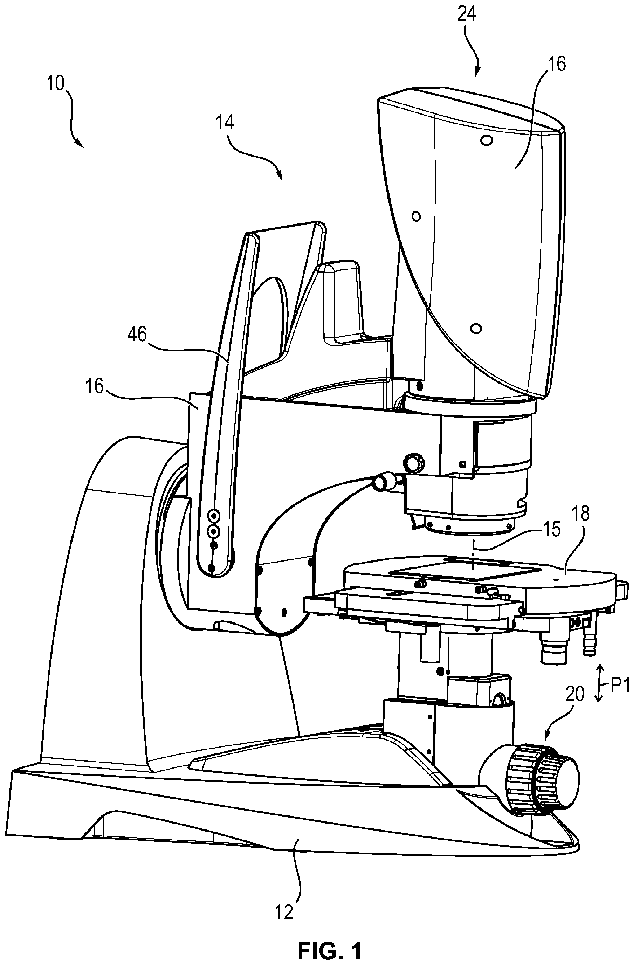

In Figur 1 ist eine schematische, perspektivische Darstellung eines digitalen Mikroskops 10 dargestellt. Das Mikroskop 10 umfasst einen stationären Stativgrundkörper 12, mit Hilfe dessen das Mikroskop 10 auf einer Oberfläche aufgestellt werden kann.

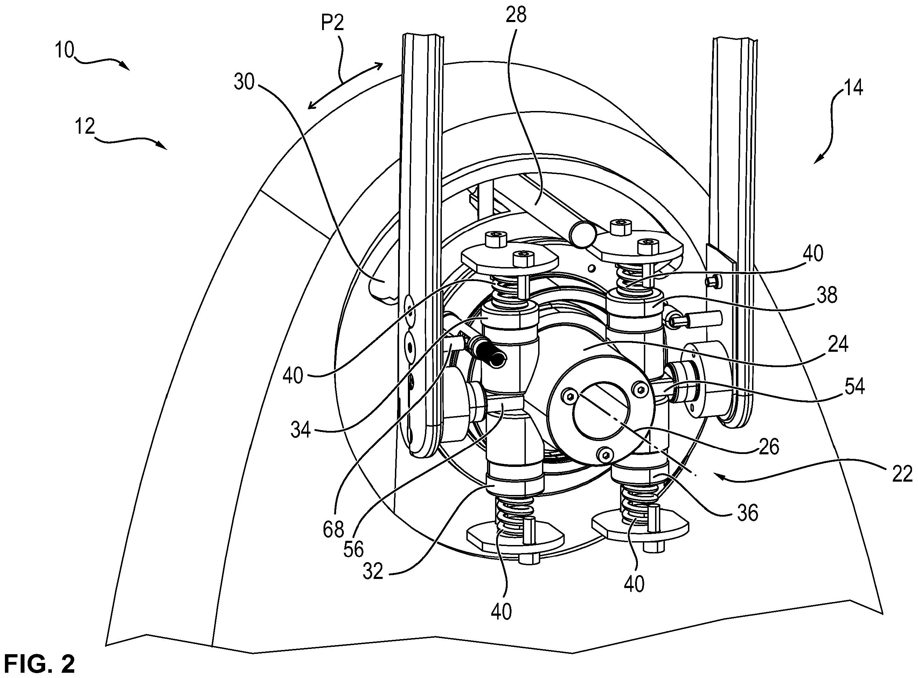

Ferner hat das Mikroskop 10 eine relativ zu diesem Stativgrundkörper 12 verschwenkbare Schwenkeinheit 14. Die schwenkbare Befestigung wird im Folgenden noch im Zusammenhang mit Figur 2 näher beschrieben.

Die Schwenkeinheit 14 umfasst mindestens eine Bilderfassungseinheit, mit deren Hilfe ein Bild der zu mikroskopierenden Objekte aufgenommen werden kann. Insbesondere können über diese Bilderfassungseinheit nicht nur einzelne Bilder, sondern auch Videos aufgenommen werden, die es ermöglichen, das zu mikroskopierende Objekt aus verschiedenen Blickwinkeln zu betrachten.

Ferner weist die Schwenkeinheit 14 ein Objektivsystem und/oder ein Zoomsystem auf, mit dessen Hilfe unterschiedliche Vergrößerungen der zu mikroskopierenden Objekte eingestellt werden können. Das Objektivsystem hat insbesondere eine Vielzahl von Objektiven, von denen jeweils eins wahlweise in den Strahlengang des Mikroskops 10 eingeschwenkt werden kann, so dass dieses eingeschwenkte Objektiv aktuell verwendet wird. Der Strahlengang bzw. die optische Achse des Mikroskops 10 ist in Figur 1 mit dem Bezugszeichen 15 bezeichnet.

Die Bilderfassungseinheit, bei der es sich insbesondere um mindestens eine Kamera handelt, und das Objektivsystem sind in Figur 1 nicht sichtbar, da diese von einem Gehäuse 16 der Schwenkeinheit 14 verdeckt sind.

Die Objektive des Objektivsystems sind insbesondere parfokal ausgebildet, so dass bei einem Objektivwechsel keine Refokussierung durch die Bedienperson erfolgen muss. Die Objektive sind hierbei insbesondere auf den Abstand zwischen der Drehachse, um die die Schwenkeinheit 14 gedreht wird, und dem Interface der Objektive, also den Bereich, in dem die Objektive angeordnet werden, abgestimmt, so dass sich ein euzentrisches System ergibt, was zur Folge hat, dass bei einem Verschwenken der Schwenkeinheit 14 relativ zum Stativgrundkörper 12 keine neue Fokussierung erfolgen muss.

An dem Stativgrundkörper 12 ist ferner ein Objekttisch 18 befestigt, auf dem die zu mikroskopierenden Objekte aufgebracht werden. Dieser Mikroskoptisch 18 kann mit Hilfe von Stellrädern 20 relativ zum Stativgrundkörper 12 in Richtung des Doppelpfeiles P1 verstellt werden, wodurch eine Fokussierung der zu mikroskopierenden Objekte möglich ist.

In Figur 2 ist eine schematische, perspektivische Darstellung eines Ausschnitts des Mikroskops 12 mit Blick auf eine Bremseinheit 22 und die Lagerung der Schwenkeinheit 14 relativ zum Stativgrundkörper 12 dargestellt. Hierzu ist das Gehäuse 16 der Schwenkeinheit 14 ausgeblendet. Ferner ist auch der obere Teil der Schwenkeinheit 14 nicht dargestellt, um diese innen liegenden Bauteile besser sichtbar zu machen.

Der Stativgrundkörper 12 umfasst eine Welle 24, auf der die Schwenkeinheit 14 um die Längsachse 26 der Welle 24 drehbar gelagert ist. Die Längsachse 26 der Welle 24 bildet somit die Drehachse der Schwenkeinheit 14.

Die Schwenkeinheit 14 umfasst einen Stab 28, der fest an der Schwenkeinheit 14 befestigt ist und innerhalb einer Kulisse 30 des Stativgrundkörpers 12 geführt ist. Die Kulisse 30 ist insbesondere kreissegmentförmig ausgebildet, wobei der Mittelpunkt dieses Kreises auf der Längsachse 26 liegt. Über die Kulisse 30 und den eingreifenden Stab 28 erfolgt zum einen eine Führung der Bewegung und zum anderen insbesondere eine Begrenzung der maximal möglichen Verschwenkung.

Die Kulisse 30 ist insbesondere derart ausgebildet, dass sie einen Winkel von 120° abdeckt, was zur Folge hat, dass die Schwenkeinheit aus einer in den Figuren 1 und 2 gezeigten Nullposition in beide Richtungen des Doppelpfeiles P2 um 60° verschwenkbar ist. Die Nullposition ist diejenige Position, bei der die Schwenkeinheit gerade ausgerichtet ist, d.h., dass sie mittig über dem Mikroskoptisch 18 angeordnet ist und die seitlichen Gehäuseteile des Gehäuses 16 vertikal ausgerichtet sind. Anders ausgedrückt ist die Nullposition diejenige Position, in der die optische Achse 15 des Mikroskops 10 senkrecht zur Oberfläche des Mikroskoptischs 18 verläuft.

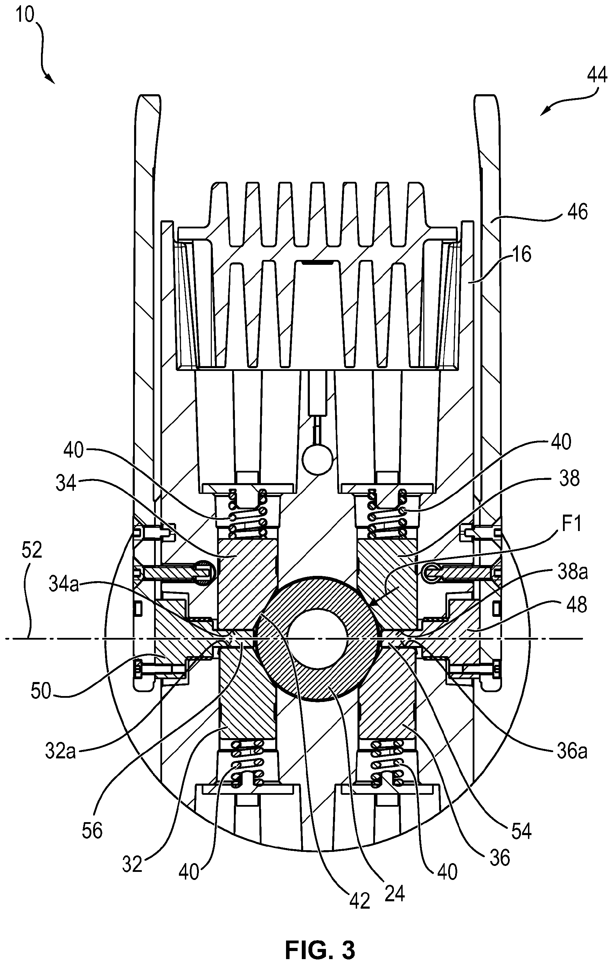

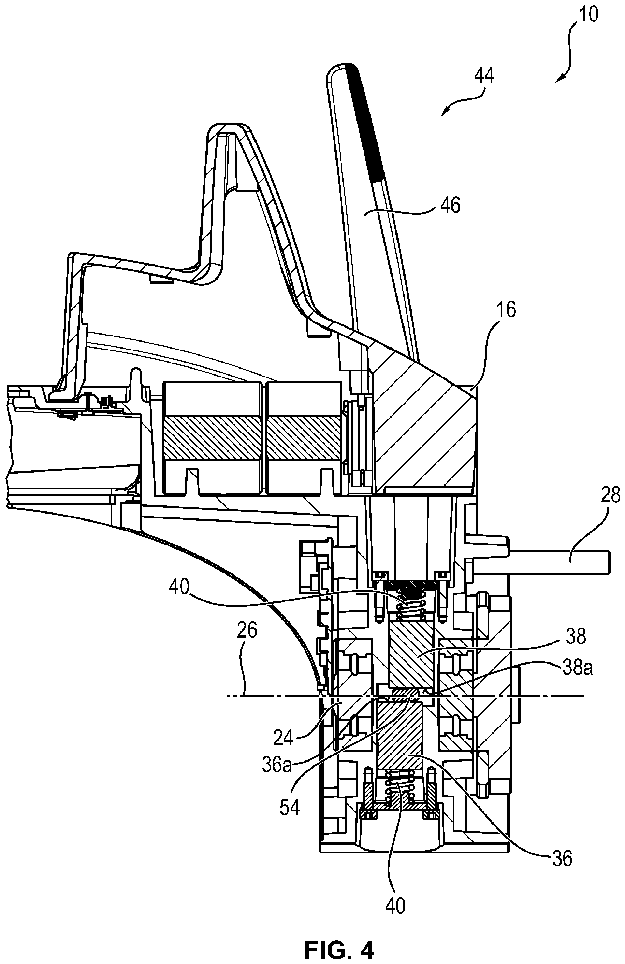

Um die Schwenkeinheit 14 in einer gewollten Position festzustellen und um deren Bewegung zu bremsen, ist die Bremseinheit 22 vorgesehen, die insgesamt vier Radialkolben 32 bis 38 aufweist, die über jeweils eine Feder 40, derart vorgespannt sind, dass sie gegen die Oberfläche der Welle 24 drücken, so dass eine Reibverbindung ausgebildet wird, wobei die hierdurch entstehende Kraft als Bremskraft bzw. Feststellkraft dient. In den Figuren 3 und 4 sind jeweils Schnittdarstellungen des Ausschnitts der Schwenkeinheit 14 und der Welle 24 dargestellt, wobei Figur 3 eine Draufsicht und Figur 4 eine Seitenansicht zeigt. Bei beiden Figuren ist hierbei eine Bremsposition dargestellt, bei der die Radialkolben 32 bis 38 die Oberfläche der Welle 24 kontaktieren und somit die Schwenkeinheit 14 festgestellt ist.

Die Radialkolben 32 bis 38 weisen jeweils eine abgeschrägte Kontaktfläche 42 auf, wobei diese insbesondere mit der Stirnseite 32a bis 38a des jeweiligen Radialkolbens einen Winkel zwischen 45° und 70°, vorzugsweise einen Winkel von etwa 60°, einschließt. Über diese abgeschrägten Flächen wird erreicht, dass die Radialkolben die Welle 24 entlang einer möglichst großen Kontaktlinie kontaktieren und eine Kraft F1 auf die Welle ausüben, durch die die notwendige Reibung aufgebracht wird und somit ein Feststellen der Bremseinheit 22 erfolgt.

Bei einer alternativen Ausführungsform können auch mehr oder weniger als vier Radialkolben 32 bis 38, beispielsweise zwei Radialkolben oder sechs Radialkolben, vorgesehen sein. Darüber hinaus kann die Kontaktfläche 42 auch eine andere Form haben. Beispielsweise kann die Form der Kontaktfläche an die in der Welle 24 angepasste sein, so dass die Kraftübertragung nicht nur entlang einer Linie, sondern flächig erfolgt.

Darüber hinaus können auch andere Bremselemente als Radialkolben 32 bis 38, beispielsweise Bremsklötze, verwendet werden.

Ferner können anstelle von Federn 40 auch andere elastische Elemente, beispielsweise Gummi oder Silikonblöcke, benutzt werden.

Die Bremseinheit 22 kann mit Hilfe eines Betätigungselementes 44 gelöst werden. Dieses Betätigungselement 44 umfasst einen Hebel 46, dessen der Bremseinheit 22 abgewandtes Ende von einer Bedienperson manuell betätigt werden kann. Bei einer, beispielsweise in Figur 1 und 2 gezeigten Grundposition ist dieses Betätigungselement 44 nicht betätigt. Um die Bremseinheit 22 zu lösen, muss der Hebel 46 von der Bedienperson aus dieser Grundposition bewegt werden. Bei dem in den Figuren 1 und 2 gezeigten Ausführungsbeispiel muss der Hebel 46 von der Bedienperson zu sich hingezogen werden, so dass eine einfache Bedienung möglich ist.

Ferner umfasst das Betätigungselement 44 zwei Zwischenelemente 48, 50, über die der Hebel 46 relativ zum Gehäuse 16 um eine Schwenkachse 52 schwenkbar gelagert ist. Ferner weisen diese Zwischenelemente 48, 50 Absätze 54, 56 auf, die jeweils zwischen zwei einander gegenüberliegend angeordneten Radialkolben 32 bis 38 angeordnet sind. In der Bremsposition sind die Oberflächen dieser Absätze 54, 56 und die Stirnseiten der Radialkolben 32 bis 38 in etwa parallel zueinander ausgerichtet.

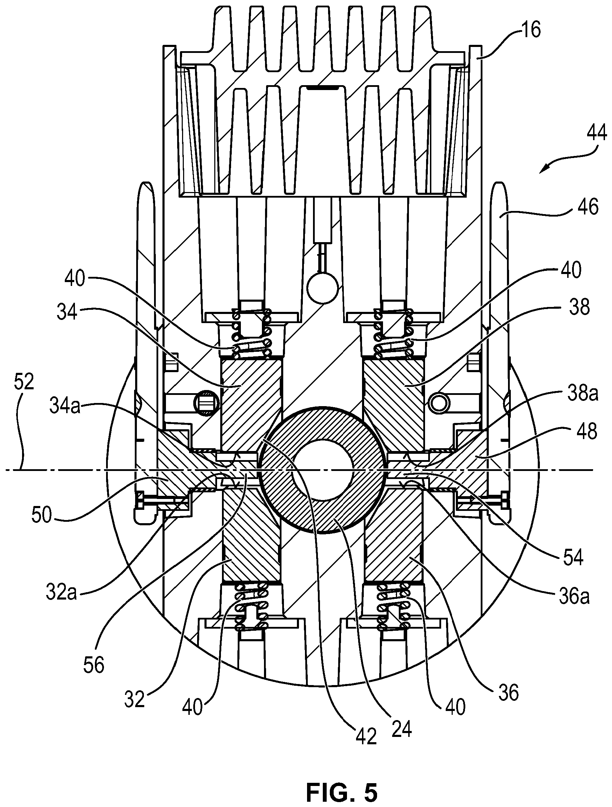

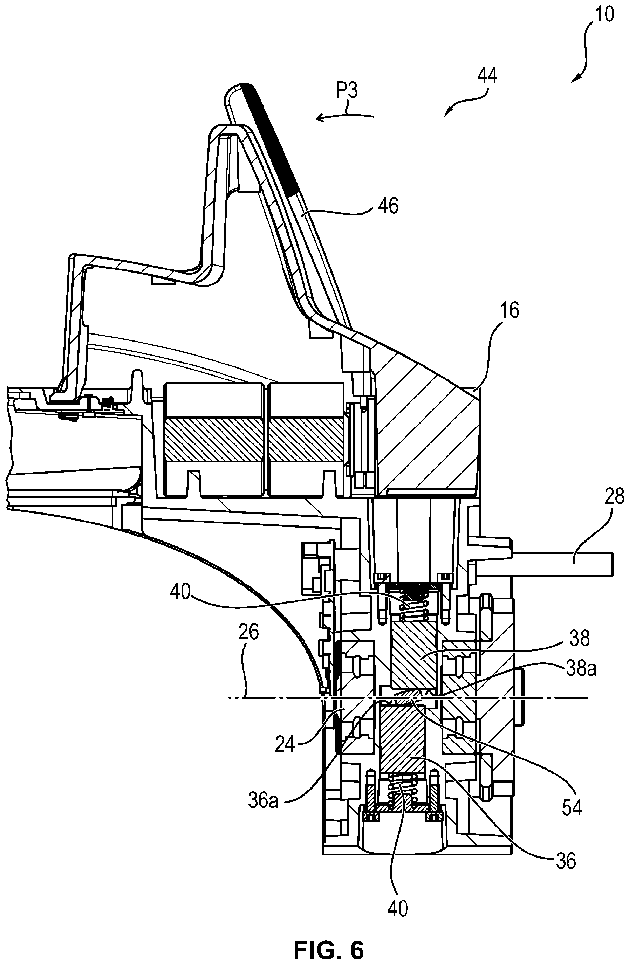

Wird der Hebel 46 von der Bedienposition zu sich hin, d.h. in Richtung des Pfeiles P3 (Figur 6), betätigt, so werden die Zwischenelemente 48, 50 zusammen mit dem Hebel 46 verschwenkt, was zur Folge hat, dass die Absätze 54, 56 verkippt werden, wodurch, wie in den Schnittdarstellungen der Figuren 5 und 6 gezeigt, die Radialkolben 52 bis 58 aus der Bremsposition heraus, voneinander weg, in Richtung einer gelösten Position bewegt werden. Bei der in den Figuren 5 und 6 gezeigten gelösten Position sind die Radialkolben 52 bis 58 hierbei so weit voneinander weg bewegt, dass sie die Welle 24 überhaupt nicht mehr kontaktieren, so dass überhaupt keine Bremskraft mehr gegeben ist. Wird der Hebel 46 dagegen nicht ganz so weit betätigt, wie bei der extremen Situation in den Figuren 5 und 6, so kann es sein, dass die Radialkolben 32 bis 38 die Welle 24 zwar noch kontaktieren, die Kraft jedoch geringer ist als bei der Bremsposition. Somit kann die Schwenkeinheit 14 trotz der Bremskraft bewegt werden, wobei jedoch die Bremskraft somit stufenlos über die Bedienperson, je nachdem wie weit sie an dem Hebel 46 zieht, eingestellt werden kann. Somit ist insbesondere eine Feinpositionierung der Schwenkeinheiten problemlos möglich.

Lässt die Bedienperson den Hebel 46 dagegen los, so werden die Radialkolben 32 bis 38 durch die Federn 40 automatisch wieder in die Bremsposition bewegt, so dass die Bremseinheit 22 automatisch festgestellt wird und ein unbeabsichtigtes unkontrolliertes Verschwenken der Schwenkeinheit 14 vermieden wird.

Darüber hinaus bewirken die Federn 40 der Radialkolben 32 bis 38 über den Kontakt der Radialkolben 32 bis 38 zu den Zwischenelementen 48, 50, dass beim Loslassen des Hebels 46 dieser automatisch wieder in die Grundposition zurückbewegt wird, ohne dass hierfür weitere elastische Elemente notwendig sind. Alternativ können dennoch auch noch weitere elastische Elemente zum Vorspannen des Hebels 46 in der Grundposition vorgesehen sein.

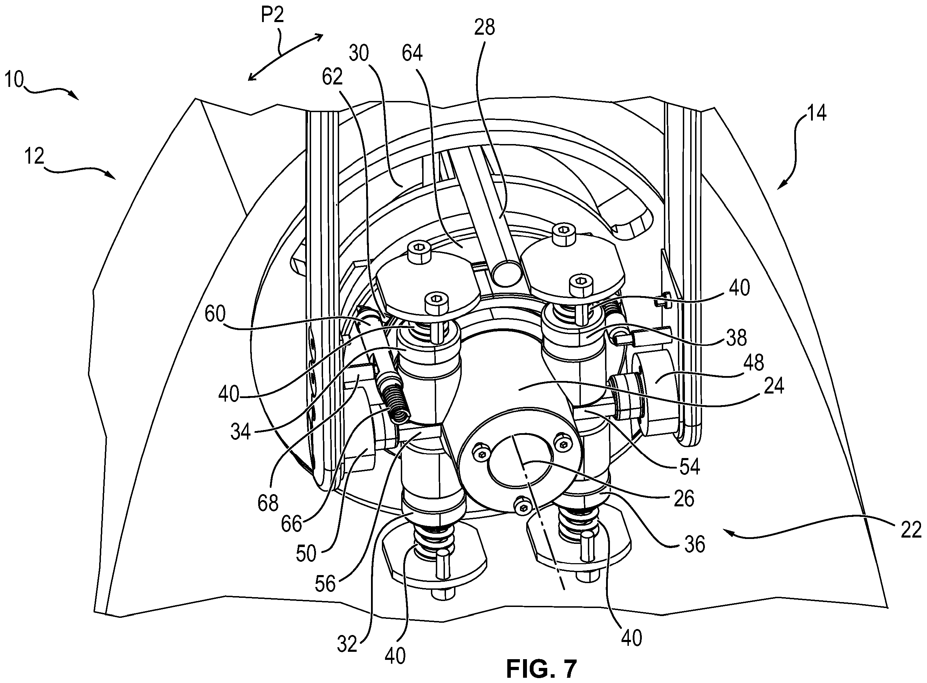

In Figur 7 ist eine weitere schematische, perspektivische Darstellung des Ausschnittes des Mikroskops 10 dargestellt, wobei hierbei der Blick auf eine als "Klickstoppmechanismus" dienende Rastverbindung gerichtet ist. Diese Rastverbindung wird zwischen einem als Stift 60 ausgebildeten ersten Rastelement und einem als Aussparung 62 ausgebildeten zweiten Rastelement hergestellt. Der Stift 60 ist hierbei Teil der Schwenkeinheit 14, wohingegen die Aussparung 62 in einem Ring 64 des Stativgrundkörpers 12 vorgesehen ist.

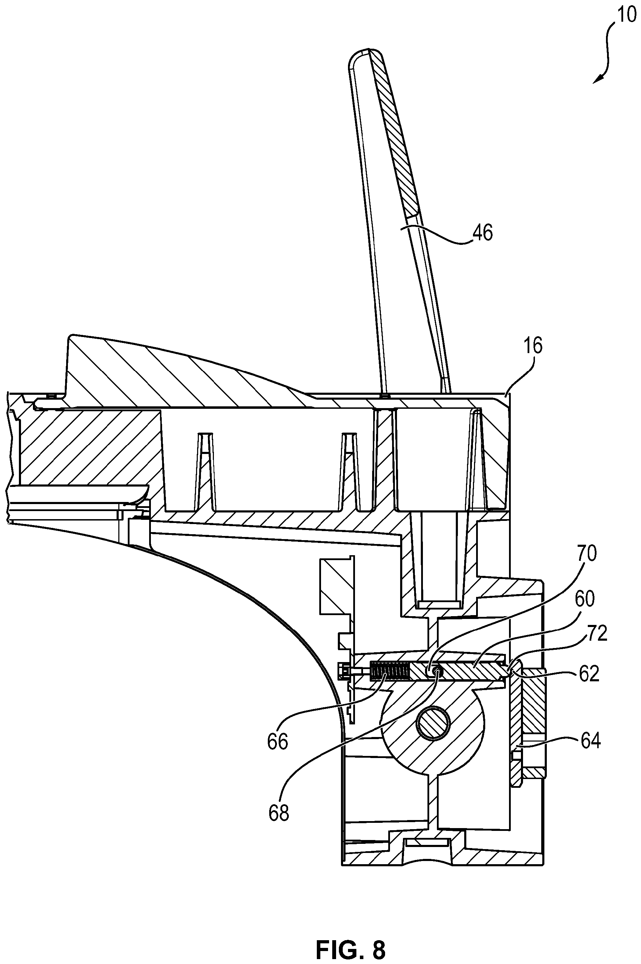

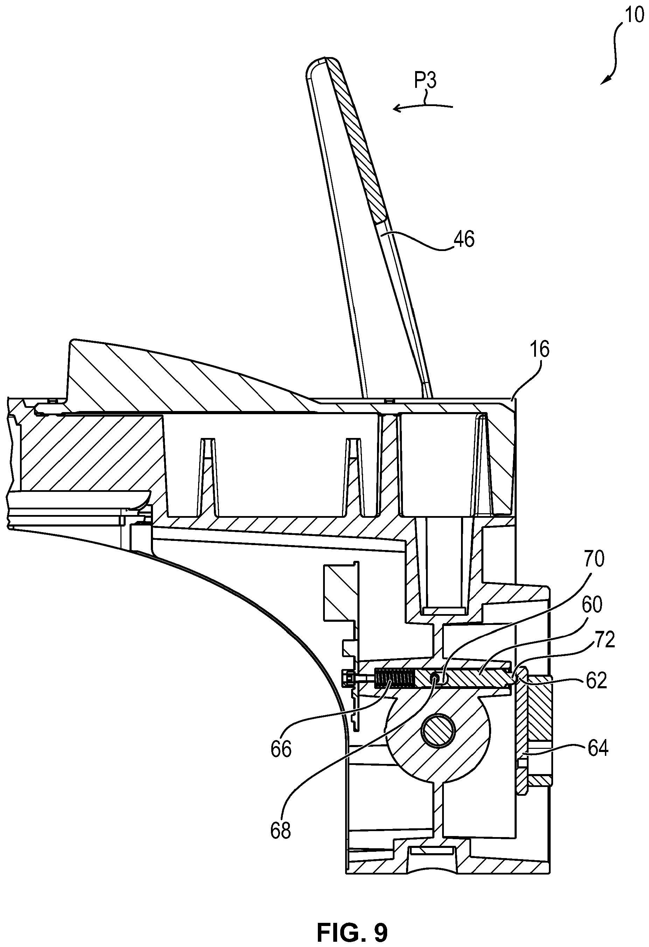

In den Figuren 8 bis 10 ist jeweils eine Schnittdarstellung eines Ausschnitts des Mikroskops 10 mit Blick auf diesen Klickstoppmechanismus dargestellt, wobei der Schnitt so gewählt ist, dass der Stift 60 geschnitten wird. In den Figuren 8 bis 10 sind unterschiedliche Stellungen des Stiftes 60 dargestellt, welche sich in Abhängigkeit der Betätigung des Betätigungselementes 44 ergeben.

In Figur 8 ist hierbei derjenige Zustand dargestellt, bei dem die Bremseinheit 22 in der Bremsposition angeordnet ist und der Hebel 46 somit unbetätigt in seiner Grundposition angeordnet ist. Der Stift 60 ist über ein als Feder 66 ausgebildetes elastisches Element in der Ausgangsposition vorgespannt. Wenn die Schwenkeinheit 14 in ihrer Nullposition angeordnet ist, so greift der in der Ausgangsposition angeordnete Stift 60 in die Aussparung 62 ein, so dass eine Rastverbindung hergestellt ist. Da bei in der Grundposition angeordnetem Hebel 46 die Bremseinheit 22 in der Bremsposition angeordnet ist, ist ein Verschwenken der Schwenkeinheit 14 generell nicht möglich.

Der Hebel 46 ist über einen Verbindungsstift 68 mit dem Stift 60 verbunden, wobei dieser Verbindungsstift 68 in ein Langloch 70 des Stiftes 60 hineinragt.

Wird der Hebel 46 innerhalb eines vorbestimmten ersten Betätigungsbereiches aus der Grundposition heraus betätigt, so wird der Verbindungsstift 68 nur so weit von dem Stativgrundkörper 12 weg bewegt, dass er innerhalb des Langloches 70 bewegt wird, ohne jedoch den Stift 60 aus seiner Ausgangsposition zu bewegen. Dieser erste Betätigungsbereich entspricht in etwa der Hälfte des maximal möglichen Betätigungsweges des Hebels 46.

Ist der Hebel 46 innerhalb dieses ersten Betätigungselementes betätigt, so ist die Bremseinheit 22 zumindest so weit gelöst, dass ein Verschwenken der Schwenkeinheit 14 möglich ist. Wird die Schwenkeinheit 14 aus der Nullposition hinaus bewegt, so wird der Stift 60 aus seiner Ausgangsposition über den Kontakt zu dem Ring 64 aus der Ausgangsposition bewegt und gleitet auf dem Ring 64 entsprechend. Um dieses Hinausbewegen aus der Aussparung 62 sicherzustellen, weist die Aussparung 62 insbesondere abgeschrägte Kanten auf und der Stift hat insbesondere einen halbkugelförmiges Ende 72, welches in die Aussparung 62 eingreift.

Wird die Schwenkeinheit 14 bei nach wie vor innerhalb des ersten Betätigungsbereiches betätigten Hebel 46 wieder zurück in die Nullposition bewegt, so wird der Stift 60 aufgrund der Rückstellkraft der Feder 66 automatisch beim Erreichen der Nullposition, und somit dem Erreichen der Aussparung 62, wieder in die Ausgangsposition zurückbewegt und rastet somit in die Aussparung 62 ein. Dieses Einrasten kann die Bedienperson haptisch durch entsprechende Vibrationen und/oder akustisch durch ein entsprechendes "Klick" wahrnehmen, so dass die Bedienperson jederzeit die Nullposition wieder exakt ansteuern kann.

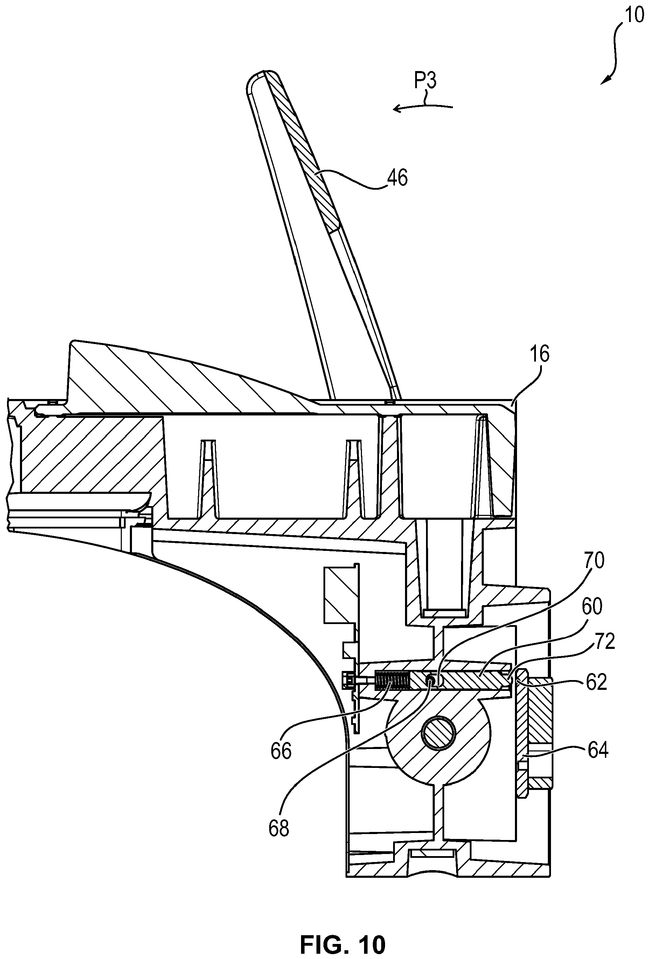

Betätigt die Bedienperson den Hebel 46 jedoch weiter als den ersten Betätigungsbereich, so dass dieser innerhalb eines vorbestimmten zweiten Betätigungsbereiches betätigt ist, wie dies beispielsweise in Figur 10 dargestellt ist, so wird der Stift 60 über den Kontakt zu dem Verbindungsstift 68 entgegen der Rückstellkraft der Feder 66 bereits so weit aus der Ausgangsposition herausbewegt, dass auch dann, wenn die Schwenkeinheit 14 in der Nullposition angeordnet ist, der Stift 60 nicht in die Aussparung 62 einrastet. Dies hat den Vorteil, dass die Schwenkeinheit 14 über die Nullposition hinweg bewegt werden kann, ohne dass ein entsprechendes Einrasten erfolgt. Somit werden beispielsweise Vibrationen vermieden, was bei der Aufnahme von Videos während eines Verschwenkens der Schwenkeinheit 14 vorteilhaft ist.

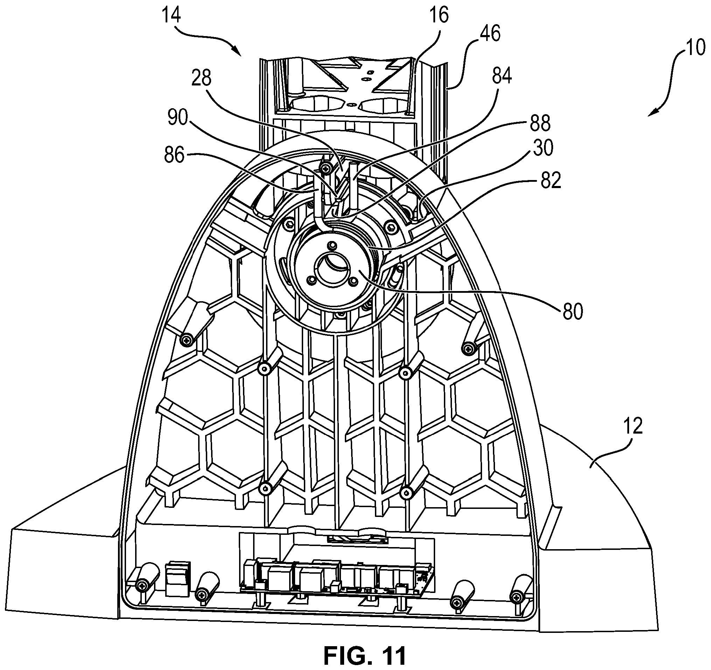

In Figur 11 ist ein weitere schematische, perspektivische Darstellung des Mikroskops 10 mit Blick auf seine Rückseite dargestellt, wobei eine Rückwand des Gehäuses des Stativgrundkörpers 12 ausgeblendet ist, um die innen liegenden Bauteile sichtbar zu machen.

Innerhalb des Gehäuses des Stativgrundkörpers 12 ist ein Wellenstumpf 80 angeordnet, der insbesondere koaxial zur Welle 24 angeordnet ist. Bei einer alternativen Ausführungsform können der Wellenstumpf 80 und die Welle 24 auch einstückig ausgebildet sein.

Auf diesem Wellenstumpf 80 ist eine Torsionsfeder 82 derart gelagert, dass ihre Wicklungen um den Wellenstumpf 80 herumlaufen, so dass auch die Achsen der Torsionsfeder 82 koaxial zum Wellenstumpf 80 und somit zur Welle 24 und somit wiederum zur Drehachse 26 der Schwenkeinheit 14 angeordnet ist.

Die beiden Enden 84, 86 des Drahtes der Torsionsfeder 82 sind nach oben weg gebogen und derart angeordnet, dass zwischen ihnen ein Zwischenraum 88 ausgebildet ist. In diesen Zwischenraum 88 ragt das der Schwenkeinheit 14 abgewandte Ende des Stabes 28 hinein. Ferner ist in diesem Zwischenraum 88 auch ein fest mit dem Stativgrundkörper 12 verbundener Vorsprung 90 angeordnet.

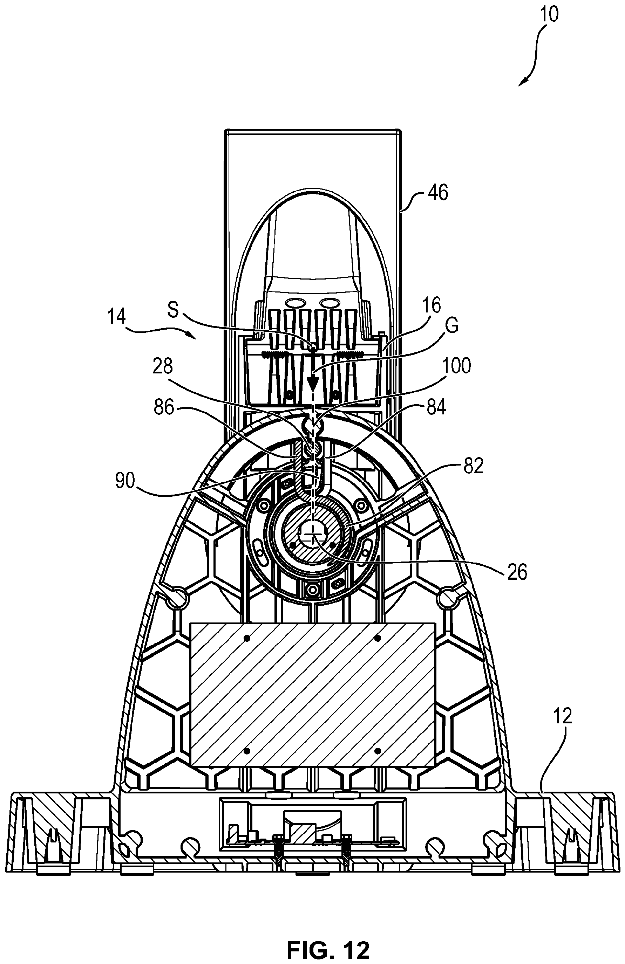

In den Figuren 12 bis 14 ist jeweils eine Schnittdarstellung des Mikroskops 10 dargestellt, wobei der Schnitt derart gelegt ist, dass das mit Blickrichtung von der Rückseite gesehen vordere Ende 86 geschnitten ist. In Figur 12 ist hierbei die Schwenkeinheit 14 in der Nullposition angeordnet. Bei dieser Nullposition kontaktiert der Stab 90 keines der beiden Federenden 84, 86 und die Torsionsfeder 82 ist nicht gespannt, so dass von ihr keine Kraft und kein Moment auf die Schwenkeinheit 14 ausgeübt wird.

Betrachtet man die Gewichtskraft der Schwenkeinheit 14 als eine konzentrierte Kraft G, die im Schwerpunkt S der Schwenkeinheit 14 angreift, so verläuft in der Nullposition das Lot dieser Kraft G, das sogenannte Schwerpunktlot 100, durch die Drehachse 26 der Schwenkeinheit 14, so dass durch die Gewichtskraft G kein Drehmoment um die Drehachse 26 erzeugt wird.

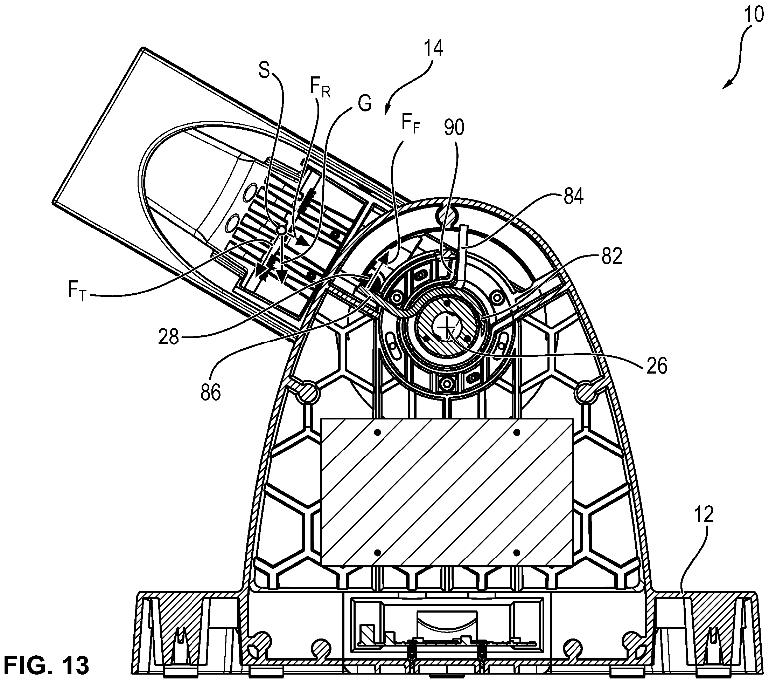

Bei Figur 13 ist die Schwenkeinheit 14 um etwa 60° nach links in eine erste Richtung aus der Nullposition verschwenkt. Die Torsionsfeder 82 stützt sich mit ihrem zweiten Ende 86 an dem Vorsprung 90 ab, wobei das andere Ende 84 der Torsionsfeder über den Stab 28 mitbewegt wird, so dass die Torsionsfeder 82 gespannt wird und eine Rückstellkraft $F_F$ auf den Stab 28 und somit die Schwenkeinheit 14 ausübt.

Wenn die Schwenkeinheit 14 aus der Nullposition verschwenkt ist, so ist das Schwerpunktlot 100 nicht mehr derart gerichtet, dass es die Drehachse 26 schneidet. Vielmehr kann die Gewichtskraft G entsprechend eines Kräfteparallelogramms auf eine Radialkraft $F_R$ und eine Tangentialkraft $F_T$ aufgeteilt werden. Diese Radialkraft $F_R$ ist in Richtung der Drehachse 26 gerichtet, so dass durch sie kein Drehmoment um die Drehachse 26 erzeugt wird. Die Tangentialkraft $F_T$ dagegen erzeugt ein entsprechendes Drehmoment (Tangentialmoment) $M_T$ um die Drehachse 26, durch das die Schwenkeinheit 14 nach unten gezogen wird.

Die Rückstellkraft $F_F$ der Feder ist entgegengesetzt der Tangentialkraft $F_T$ und parallel zu dieser gerichtet, so dass diese ebenfalls ein Drehmoment, das sogenannte Rückstellmoment $M_R$, um die Drehachse 26 erzeugt, wobei dieses jedoch dem Tangentialmoment $M_T$ entgegengerichtet ist und somit als Gegenmoment bezeichnet wird. Das aus dem durch die Tangentialkraft $F_T$ erzeugten Drehmoment $M_T$ und dem Gegenmoment resultierende Moment ist somit geringer als das durch die Tangentialkraft $F_T$ erzeugte Tangentialmoment $M_T$. Dies hat zur Folge, dass eine Bedienperson zum Bewegen der Schwenkeinheit 14 in Richtung der Nullposition eine geringere Kraft aufbringen muss. Darüber hinaus kann die Bremseinheit 22 kleiner dimensioniert werden, da durch sie zur Feststellung der Schwenkeinheit 14 in einer gewünschten Position somit nur noch eine geringere Bremskraft aufgebracht werden muss, welche nämlich nur das resultierende Moment ausgleichen muss.

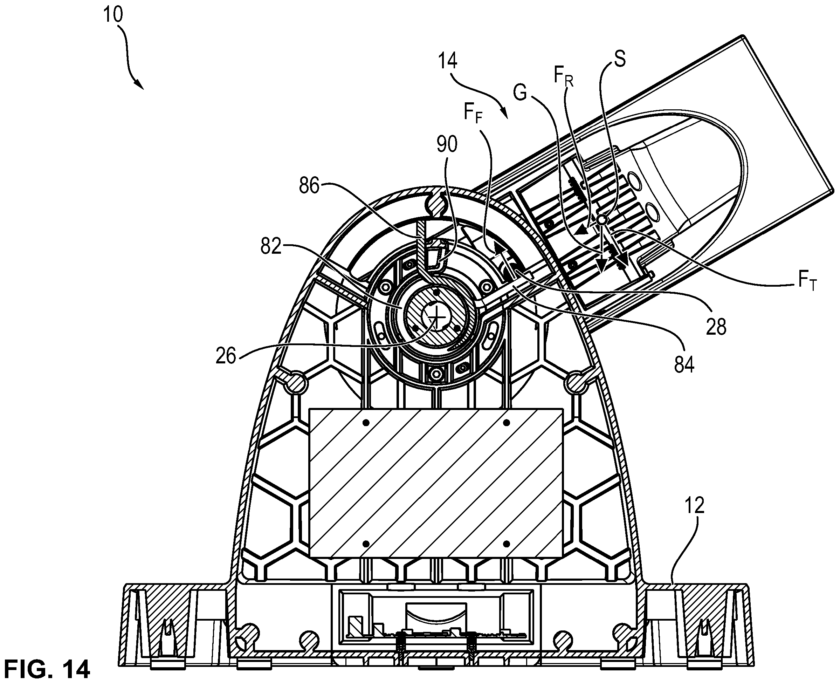

In Figur 14 ist die Auslenkung der Schwenkeinheit 14 in die bezogen auf die Auslenkung nach Figur 13 gesehenen entgegengesetzte Richtung gezeigt. In diesem Fall stützt sich das erste Ende 84 der Feder an dem Vorsprung 90 ab, wogegen das zweite Ende 86 der Feder durch den Stab 28 mitgenommen wird. Durch die symmetrische Ausbildung der Torsionsfeder 82 und der symmetrischen Anordnung wird wiederum ein Rückstellmoment $M_{RF}$ erzeugt, das dem Tangentialmoment $M_T$ der Schwenkeinheit 14 entgegengerichtet ist und die gleiche Größe hat, wie bei der gleichen Auslenkung in die andere Richtung. Durch die Stärke der verwendeten Torsionsfeder 82 kann eingestellt werden, wie groß die Rückstellkraft und somit das Rückstellmoment $M_R$ ausgebildet sind und somit wie groß das verbleibende resultierende Moment ist.

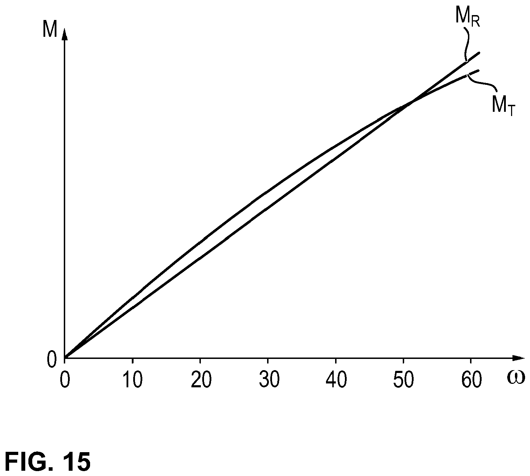

Bei einer in Figur 15 gezeigten ersten Ausführungsform ist die Torsionsfeder 82 derart gewählt, dass, das Rückstellmoment $M_R$ bei einem Verschwenken von 50 ° aus der Nullposition in etwa gleich groß wie das Tangentialmoment $M_T$ ist, so dass kein resultierendes Moment verbleibt. Bei einem Verschwenken von mehr als 50° aus der Nullposition ist das Rückstellmoment $M_R$ größer als das Tangentialmoment $M_T$, so dass sich ein negatives resultierendes Moment ergibt.

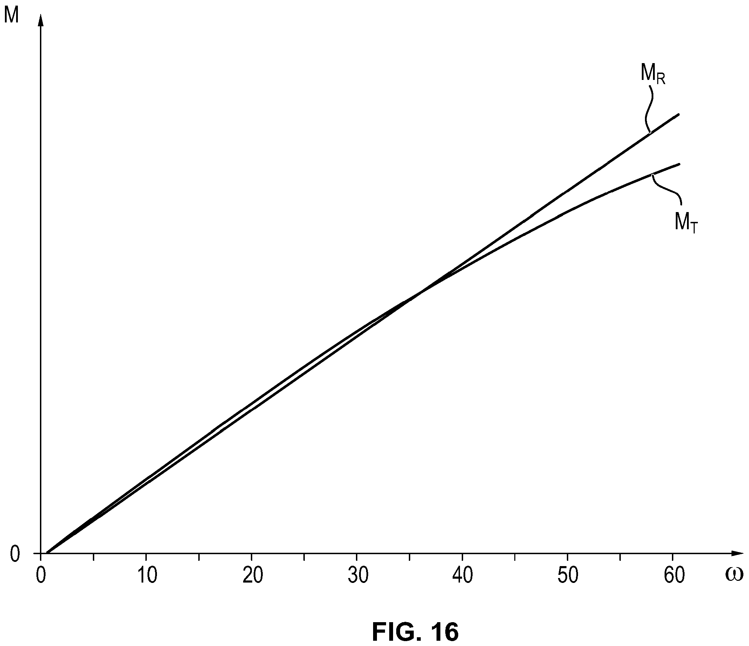

Bei einer in Figur 16 gezeigten zweiten Ausführungsform ist die Torsionsfeder 82 derart gewählt, dass, das Rückstellmoment $M_R$ bei einem Verschwenken von 38 ° aus der Nullposition in etwa gleich groß wie das Tangentialmoment $M_T$ ist, so dass kein resultierendes Moment verbleibt. Bei einem Verschwenken von mehr als 38° aus der Nullposition ist das Rückstellmoment $M_R$ größer als das Tangentialmoment $M_T$, so dass sich ein negatives resultierendes Moment ergibt.

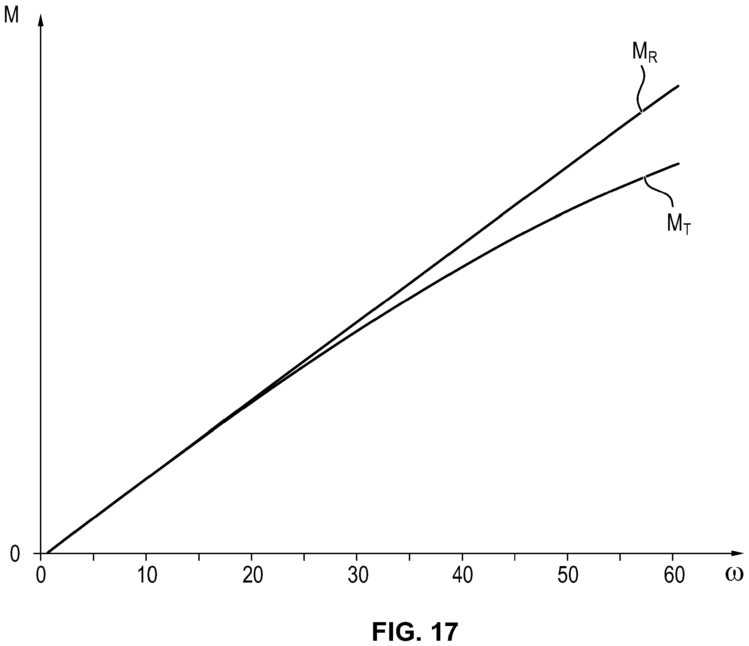

Bei einer in Figur 17 gezeigten dritten Ausführungsform ist die Torsionsfeder 82 derart gewählt, dass, das Rückstellmoment $M_R$ immer gleich groß oder größer als das Tangentialmoment $M_T$ ist, so dass das resultierende Moment immer kleiner oder gleich Null ist.

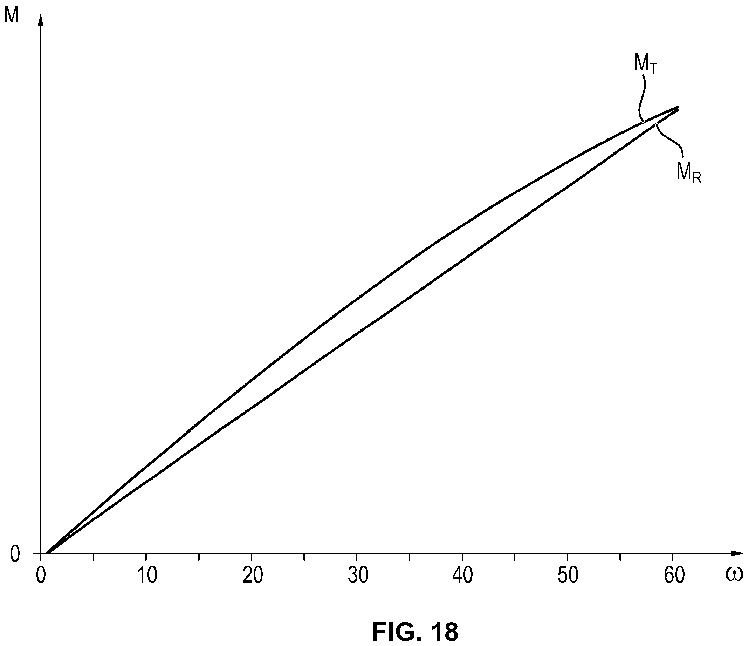

Bei einer in Figur 18 gezeigten vierten Ausführungsform ist die Torsionsfeder 82 derart gewählt, dass, das Rückstellmoment $M_R$ immer kleiner als das Tangentialmoment $M_T$ oder gleich dem Tangentialmoment $M_T$ ist, so dass das resultierende Moment immer größer Null ist. Bei dieser Ausführungsform wird anders als bei den anderen Ausführungsformen zwar nicht erreicht, dass das Anschlagen der Schwenkeinheit 16 an einen Anschlag zur Begrenzung des maximalen Schwenkwinkels der Schwenkeinheit 16 vermieden, jedoch bewirkt auch diese Ausführungsform, dass die Bedienperson zum Verschwenken eine geringe Kraft aufbringen muss und auch die notwendige Bremskraft der Bremseinheit 22 geringer ist. Insbesondere ist bei einem Verschwenken um dem maximal möglichen Winkel aus der Nullposition das Rückstellmoment $M_R$ genauso groß wie das Tangentialmoment $M_T$.

Bei alle Ausführungsformen ist die Torsionsfeder derart gewählt, dass über den gesamten Schwenkbereich das Rückstellmoment $M_R$ dem 0,8-fachen bis 1,2-fachen des Tangentialmomentes $M_T$ entspricht. Somit wird erreicht, dass das resultierende Moment $M_R$ immer maximal +/-20% des Tangentialmoments $M_T$ beträgt, und somit die von der Bedienperson bzw. der Bremseinheit 22 aufzubringende Kraft stets gering ist und ein Wegschnellen der Schwenkeinheit 22 beim Lösen der Bremseinheit 22 in beiden Richtungen vermieden wird.

Bei einer alternativen Ausführungsform der Erfindung können statt der Torsionsfeder 82 auch andere Arten von Federn und andere elastische Elemente verwendet werden.

**Bezugszeichenliste**

| | |
|---|---|
| 10 | Mikroskop |
| 12 | Stativgrundkörper |
| 14 | Schwenkeinheit |
| 15 | optische Achse |
| 16 | Gehäuse |
| 18 | Mikroskoptisch |
| 20 | Stellräder |
| 22 | Bremseinheit |

| 24 | Welle |
| 26 | Drehachse |
| 28 | Stab |
| 30 | Kulisse |
| 32 bis 38 | Radialkolben |
| 32a bis 38a | Stirnfläche |
| 40 | Feder |
| 42 | Kontaktfläche |
| 44 | Betätigungselement |
| 46 | Hebel |
| 48, 50 | Zwischenelement |
| 52 | Schwenkachse |
| 54,56 | Absatz |
| 60 | Stift |
| 62 | Aussparung |
| 64 | Ring |
| 66 | Feder |
| 68 | Verbindungsstift |
| 70 | Langloch |
| 72 | Ende |
| 80 | Wellenstumpf |
| 82 | Torsionsfeder |
| 84,86 | Ende |
| 88 | Zwischenraum |
| 90 | Vorsprung |
| 100 | Schwerpunktlot |
| F1, $F_F$, $F_R$, $F_T$, G | Kraft |
| $M_R$, $M_T$ | Moment |
| S | Schwerpunkt |
| P1 bis P3 | Richtung |

**Patentansprüche**

1. Digitales Mikroskop umfassend,
   einen stationären Stativgrundkörper (12),
   eine auf einer Welle (24) des Stativgrundkörpers (12) um die Längsachse (26) der Welle (24) verschwenkbar gelagerten Schwenkeinheit (14), die eine Bilderfassungseinheit zur Aufnahme von Bildern zur mikroskopierender Objekte umfasst,
   eine Bremseinheit (32 bis 38) zum Bremsen und/oder Feststellen der Schwenkeinheit (14), und
   ein Betätigungselement (44) zum Lösen der Bremseinheit (32 bis 38),
   wobei mindestens ein elastisches Element (82) vorgesehen ist, das beim Verschwenken der Schwenkeinheit (14) aus einer vorbestimmten Nullposition ein Rückstellmoment ($M_R$) auf die Schwenkeinheit (14) ausübt, wobei das Rückstellmoment ($M_R$) einem durch die Gewichtskraft (G) der Schwenkeinheit (14) bewirkten Tangentialmoment ($M_T$) entgegen gerichtet ist,
   **dadurch gekennzeichnet, dass** der Stativgrundkörper (12) eine Kulisse (30) und
   die Schwenkeinheit (14) einen Stab (28) umfasst, der fest mit der Schwenkeinheit (14) verbunden ist, wobei der Stab (28) in die Kulisse (30) hineinragt und innerhalb der Kulisse (30) geführt ist.

2. Mikroskop (10) nach Anspruch 1, **dadurch gekennzeichnet, dass** zumindest in einem Teilbereich des Schwenkbereichs der Schwenkeinheit (14) das Rückstellmoment ($M_R$) dem 0,8-fachen bis 1,2-fachen des Tangentialmomentes ($M_T$) entspricht.

3. Mikroskop (10) nach Anspruch 1 oder 2, **dadurch gekennzeichnet, dass** zumindest in einem Teilbereich des Schwenkbereichs der Schwenkeinheit (14) die folgende Gleichung erfüllt:

$$M_R >= M_T$$

$M_R$=Rückstellmoment des elastischen Elements (82)
$M_T$=Tangentialmoment der Gewichtskraft (G) der Schwenkeinheit (14).

4. Mikroskop (10) nach Anspruch 3, **dadurch gekennzeichnet, dass** die Gleichung für jedes Verschwenken der Schwenkeinheit (14) aus der Nullposition um mindestens 80%, vorzugsweise mindestens 70%, insbesondere mindestens 50%, des maximalen Schwenkwinkels erfüllt ist.

5. Mikroskop (10) nach Anspruch 3, **dadurch gekennzeichnet, dass** die Gleichung für den gesamten Schwenkbereich erfüllt ist.

6. Mikroskop (10) nach einem der vorhergehenden Ansprüche, **dadurch gekennzeichnet, dass** das elastische Element (82) an dem Stativgrundkörper (12) befestigt ist.

7. Mikroskop (10) nach einem der vorhergehenden Ansprüche, **dadurch gekennzeichnet, dass** das elastische Element (82) eine Torsionsfeder ist.

8. Mikroskop (10) nach Anspruch 7, **dadurch gekennzeichnet, dass** die Kulisse (30) kreisbogensegmentförmig ist, wobei der Mittelpunkt des Kreises auf der Drehachse (26) der Schwenkeinheit (14) liegt.

9. Mikroskop (10) nach Anspruch 7 oder 8, **dadurch gekennzeichnet, dass** die Torsionsfeder (82) drehbar auf einem Wellenstumpf (80) angeordnet ist, dass die Enden (84, 86) des Drahtes der Torsionsfeder (82) derart zur Wicklung der Torsionsfeder (82) abgewinkelt sind, dass zwischen ihnen ein Zwischenraum (88) ausgebildet ist, dass der Stab (28) in diesen Zwischenraum (88) hineinragt, und dass ein Vorsprung (90) des Stativgrundkörpers (12) ebenfalls in den Zwischenraum (88) hineinragt.

10. Mikroskop (10) nach Anspruch 9, **dadurch gekennzeichnet, dass** beim Verschwenken der Schwenkeinheit (14) aus der Nullposition in eine erste Richtung sich das erste Ende (84) der Torsionsfeder (86) an dem Vorsprung (90) abstützt und das zweite Ende (86) der Torsionsfeder (82) von dem Stab (28) mitgenommen wird, und dass beim Verschwenken der Schwenkeinheit (14) aus der Nullposition in eine der ersten Richtung entgegengesetzte zweite Richtung sich das zweite Ende (86) der Torsionsfeder (82) an dem Vorsprung (90) abstützt und das erste Ende (82) der Torsionsfeder (80) von dem Stab (28) mitgenommen wird.

11. Mikroskop (10) nach Anspruch 10, **dadurch gekennzeichnet, dass** in der Nullposition der Stab (28) keines der beiden Enden (84, 86) der Torsionsfeder (82) kontaktiert.

12. Mikroskop (10) nach einem der vorhergehenden Ansprüche, **dadurch gekennzeichnet, dass**, wenn die Schwenkeinheit (14) in der Nullposition angeordnet ist, das elastische Element (82) ungespannt ist.

13. Mikroskop (10) nach einem der vorhergehenden Ansprüche, **dadurch gekennzeichnet, dass** die Schwenkeinheit (14) ein erstes Rastelement (60) umfasst, dass der Stativgrundkörper (12) ein, insbesondere komplementär zum ersten Rastelement (60) ausgebildetes, zweites Rastelement (62) umfasst, dass das erste Rastelement (60) und das zweite Rastelement (62) miteinander gekoppelt sind, wenn die Schwenkeinheit (14) in der Nullposition angeordnet ist und wenn das Betätigungselement (44) in einer unbetätigten Grundposition angeordnet ist, und dass das erste Rastelement (60) und das zweite Rastelement (62) miteinander gekoppelt sind, wenn die Schwenkeinheit (14) in der Nullposition angeordnet ist und wenn das Betätigungselement (44) innerhalb eines vorbestimmten ersten Betätigungsbereichs betätigt ist.

14. Mikroskop (10) nach einem der vorhergehenden Ansprüche, **dadurch gekennzeichnet, dass** die Bremseinheit (22) ein mit Hilfe eines weiteren elastischen Elements (40) in einer Bremsposition vorgespanntes Bremselement (32 bis 38) umfasst, das in der Bremsposition die Welle (24) kontaktiert, dass das Bremselement (32 bis 38) durch manuelle Betätigung des Betätigungselements (44) entgegen der Rückstellkraft des weiteren elastischen Elements (40) von der Bremsposition in eine gelöste Position bewegbar ist, und dass das Betätigungselement (44) über eine Kopplungseinheit mit dem Bremselement (32 bis 38) gekoppelt ist.

**Claims**

1. A digital microscope comprising:

a stationary stand base body (12),
a pivot unit (14) mounted on a shaft (24) of the stand base body (12) pivotably about the longitudinal axis (26) of the shaft (24), the pivot unit (14) comprising an image capturing unit for capturing images of objects to be examined microscopically,
a brake unit (32 to 38) for braking and/or immobilizing the pivot unit (14), and
an actuation element (44) for releasing the brake unit (32 to 38),
at least one elastic element (82) being provided that exerts, upon pivoting of the pivot unit (14) out of a predetermined zero position, a restoring moment ($M_R$) on the pivot unit (14), the restoring moment ($M_R$) being directed against a tangential moment ($M_T$) generated by the weight (G) of the pivot unit (14),
**characterized in that** the stand base body (12) comprises a slotted link (30) and the pivot unit (14) comprises a rod (28) that is firmly connected to the pivot unit (14), the rod (28) projecting into the slotted link (30) and being guided within the slotted link (30).

2. The microscope (10) according to claim 1, **characterized in that** at least in a portion of the pivoting range of the pivot unit (14) the restoring moment ($M_R$) corresponds to 0.8 times to 1.2 times the tangential moment ($M_T$).

3. The microscope (10) according to claim 1 or 2, **characterized in that** at least in a portion of the pivoting range of the pivot unit (14), the following equation is satisfied:

$$M_R >= M_T$$

$M_R$ = restoring moment of the elastic element (82)
$M_T$ = tangential moment of the weight (G) of the pivot unit (14).

4. The microscope (10) according to claim 3, **characterized in that** the equation is satisfied for any pivoting of the pivot unit (14) out of the zero position by at least 80%, preferably at least 70%, in particular at least 50% of the maximum pivot angle.

5. The microscope (10) according to claim 3, **characterized in that** the equation is satisfied for the entire pivoting range.

6. The microscope (10) according to one of the preceding claims, **characterized in that** the elastic element (82) is fastened on the stand base body (12).

7. The microscope (10) according to one of the preceding claims, **characterized in that** the elastic element (82) is a torsion spring.

8. The microscope (10) according to claim 7, **characterized in that** the slotted link (30) is in the shape of a circular arc segment, the center of the circle being located on the rotation axis (26) of the pivot unit (14) .

9. The microscope (10) according to claim 7 or 8, **characterized in that** the torsion spring (82) is arranged rotatably on a stub shaft (80), that the ends (84, 86) of the wire of the torsion spring (82) are angled with respect to the turns of the torsion spring (82) such that a gap (88) is formed between them, that the rod (28) projects into this gap (88), and that a projection (90) of the stand base body (12) likewise projects into the gap (88).

10. The microscope (10) according to claim 9, **characterized in that** upon pivoting of the pivot unit (14) out of the zero position in a first direction, the first end (84) of the torsion spring (86) rests against the projection (90) and the second end (86) of the torsion spring (82) is entrained by the rod (28), and that upon pivoting the pivot unit (14) out of the zero position in a second direction opposite to the first direction, the second end (86) of the torsion spring (82) rests against the projection (90) and the first end (82) of the torsion spring (80) is entrained by the rod (28).

11. The microscope (10) according to claim 10, **characterized in that** in the zero position the rod (28) does not contact either of the two ends (84, 86) of the torsion spring (82).

12. The microscope (10) according to one of the preceding claims, **characterized in that**, when the pivot unit (14) is arranged in the zero position, the elastic element (82) is unloaded.

13. The microscope (10) according to one of the preceding claims, **characterized in that** the pivot unit (14) comprises a first latching element (60), that the stand base body (12) comprises a second latching element (62) that is in particular complementary to the first latching element, that the first latching element (60) and the second latching element (62) are coupled to each other when the pivot unit (14) is arranged in the zero position and when the actuation element (44) is arranged in a non-actuated home position, and that the first latching element (60) and the second latching element (62) are coupled to each other when the pivot unit (14) is arranged in the zero position and when the actuation element (44) is actuated within a predetermined first actuation range.

14. The microscope (10) according to one of the preceding claims, **characterized in that** the brake unit (22) comprises a brake element (32 to 38) biased by a further elastic element (40) in a braking position, in which the brake element contacts the shaft (24), that the brake element (32 to 38) is movable against the restoring force of the further elastic element (40) from the braking position into a released position by manual actuation of the actuation element, and that the actuation element (44) is coupled to the brake element (32 to 38) via a coupling unit.

**Revendications**

1. Microscope numérique comprenant :

   un corps de base trépied stationnaire (12),
   une unité oscillante (14) montée sur un arbre (24) du corps de base trépied (12) de manière oscillante autour de l'axe longitudinal (26) de l'arbre (24), qui comprend une unité d'acquisition d'images pour l'enregistrement d'images des objets microscopisés,
   une unité de freinage (32 à 38) pour le freinage et/ou la fixation de l'unité oscillante (14), et
   un élément d'actionnement (44) pour le relâchement de l'unité de freinage (32 à 38),
   au moins un élément élastique (82) étant prévu, qui exerce lors de l'oscillation de l'unité oscillante (14) à partir d'une position zéro prédéterminée un moment de rappel ($M_R$) sur l'unité oscillante (14), le moment de rappel ($M_R$) étant orienté à l'encontre d'un moment tangentiel ($M_T$) produit par la force de pesanteur (G) de l'unité oscillante (14),
   **caractérisé en ce que** le corps de base trépied (12) comprend un coulisseau (30) et l'unité oscillante (14) comprend une baguette (28), qui est reliée de manière fixe avec l'unité oscillante (14), la baguette (28) étant en saillie dans le coulisseau (30) et étant guidée à l'intérieur du coulisseau (30).

2. Microscope (10) selon la revendication 1, **caractérisé en ce que** le moment de rappel ($M_R$) correspond à 0,8 fois à 1,2 fois le moment tangentiel ($M_T$) au moins dans une plage partielle de la plage d'oscillation de l'unité oscillante (14).

3. Microscope (10) selon la revendication 1 ou 2, **caractérisé en ce qu'**au moins dans une plage partielle de la plage d'oscillation de l'unité oscillante (14), l'équation suivante est satisfaite :

$$M_R \ >= \ M_T$$

   $M_R$ = moment de rappel de l'élément élastique (82)
   $M_T$ = moment tangentiel de la force de pesanteur (G) de l'unité oscillante (14).

4. Microscope (10) selon la revendication 3, **caractérisé en ce que** l'équation est satisfaite pour chaque oscillation de l'unité oscillante (14) à partir de la position zéro d'au moins 80 %, de préférence d'au moins 70 %, notamment d'au moins 50 %, de l'angle d'oscillation maximal.

5. Microscope (10) selon la revendication 3, **caractérisé en ce que** l'équation est satisfaite pour l'ensemble de la plage d'oscillation.

6. Microscope (10) selon l'une quelconque des revendications précédentes, **caractérisé en ce que** l'élément élastique (82) est fixé au corps de base trépied (12).

**7.** Microscope (10) selon l'une quelconque des revendications précédentes, **caractérisé en ce que** l'élément élastique (82) est un ressort de torsion.

**8.** Microscope (10) selon la revendication 7, **caractérisé en ce que** le coulisseau (30) est en forme de segment d'arc de cercle, le point central du cercle étant situé sur l'axe de rotation (26) de l'unité oscillante (14).

**9.** Microscope (10) selon la revendication 7 ou 8, **caractérisé en ce que** le ressort de torsion (82) est agencé de manière rotative sur un bout d'arbre (80), **en ce que** les extrémités (84, 86) du fil du ressort de torsion (82) sont pliées pour l'enroulement du ressort de torsion (82) de telle sorte qu'un espace intermédiaire (88) soit formé entre elles, **en ce que** la baguette (28) est en saillie dans cet espace intermédiaire (88), et **en ce qu'**une protubérance (90) du corps de base trépied (12) est également en saillie dans l'espace intermédiaire (88).

**10.** Microscope (10) selon la revendication 9, **caractérisé en ce que**, lors de l'oscillation de l'unité oscillante (14) à partir de la position zéro dans une première direction, la première extrémité (84) du ressort de torsion (86) s'appuie sur la protubérance (90) et la deuxième extrémité (86) du ressort de torsion (82) est entraînée par la baguette (28), et **en ce que** lors de l'oscillation de l'unité oscillante (14) à partir de la position zéro dans une deuxième direction opposée à la première direction, la deuxième extrémité (86) du ressort de torsion (82) s'appuie sur la protubérance (90) et la première extrémité (82) du ressort de torsion (80) est entraînée par la baguette (28) .

**11.** Microscope (10) selon la revendication 10, **caractérisé en ce que**, dans la position zéro, la baguette (28) n'est en contact avec aucune des deux extrémité (84, 86) du ressort de torsion (82).

**12.** Microscope (10) selon l'une quelconque des revendications précédentes, **caractérisé en ce que**, lorsque l'unité oscillante (14) est agencée dans la position zéro, l'élément élastique (82) est non tendu.

**13.** Microscope (10) selon l'une quelconque des revendications précédentes, **caractérisé en ce que** l'unité oscillante (14) comprend un premier élément d'encliquetage (60), **en ce que** le corps de base trépied (12) comprend un deuxième élément d'encliquetage (62), notamment configuré sous forme complémentaire du premier élément d'encliquetage (60), **en ce que** le premier élément d'encliquetage (60) et le deuxième élément d'encliquetage (62) sont couplés l'un avec l'autre lorsque l'unité oscillante (14) est agencée dans la position zéro et lorsque l'élément d'actionnement (44) est agencé dans une position de base non actionnée, et **en ce que** le premier élément d'encliquetage (60) et le deuxième élément d'encliquetage (62) sont couplés l'un avec l'autre lorsque l'unité oscillante (14) est agencée dans la position zéro et lorsque l'élément d'actionnement (44) est actionné dans une première plage d'actionnement prédéterminée.

**14.** Microscope (10) selon l'une quelconque des revendications précédentes, **caractérisé en ce que** l'unité de freinage (22) comprend un élément de freinage (32 à 38) prétendu dans une position de freinage à l'aide d'un élément élastique supplémentaire (40), qui rentre en contact avec l'arbre (24) dans la position de freinage, **en ce que** l'élément de freinage (32 à 38) peut être déplacé depuis la position de freinage dans une position relâchée par actionnement manuel de l'élément d'actionnement (44) à l'encontre de la force de rappel de l'élément élastique supplémentaire (40), et **en ce que** l'élément d'actionnement (44) est couplé par une unité de couplage avec l'élément de freinage (32 à 38).

**FIG. 1**

**FIG. 2**

**FIG. 3**

**FIG. 4**

**FIG. 5**

**FIG. 6**

FIG. 7

**FIG. 8**

**FIG. 9**

**FIG. 10**

FIG. 11

**FIG. 12**

FIG. 13

EP 3 006 982 B1

**FIG. 14**

EP 3 006 982 B1

**FIG. 15**

FIG. 16

**FIG. 17**

**FIG. 18**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4231516 A1
- EP 1248133 A2
- US 5402582 A

- EP 2803895 A1
- JP 2011154137 A